(19) Europäisches Patentamt
European Patent Office
Office européen des brevets

(11) Veröffentlichungsnummer: 0 044 061
A1

(12) EUROPÄISCHE PATENTANMELDUNG

(21) Anmeldenummer: 81105430.3

(22) Anmeldetag: 11.07.81

(51) Int. Cl.³: D 06 P 3/70
D 06 P 1/41, D 06 P 1/90
D 01 F 1/06, D 01 F 6/18
//C09B44/00, C09B69/00,
C09B23/16, C09B26/04, C09B57/06

(30) Priorität: 16.07.80 DE 3026947

(43) Veröffentlichungstag der Anmeldung:
20.01.82 Patentblatt 82/3

(84) Benannte Vertragsstaaten:
DE FR GB IT

(71) Anmelder: HOECHST AKTIENGESELLSCHAFT
Postfach 80 03 20
D-6230 Frankfurt/Main 80(DE)

(72) Erfinder: Hähnke, Manfred, Dr.
Behringstrasse 13
D-6233 Kelkheim (Taunus)(DE)

(72) Erfinder: Mohr, Reinhard, Dr.
Rohrstrasse 34
D-6050 Offenbach am Main(DE)

(72) Erfinder: Hohmann, Kurt
Am Forsthaus Gravenbruch 55
D-6078 Neu-Isenburg(DE)

(54) **Verfahren zum Färben von Fasergut von aus organischen Lösemitteln versponnenen Acrylnitril-Polymerisaten im Gelzustand.**

(57) Nach einem Naßspinnprozeß erhaltenes, nicht getrocknetes Fasermaterial von noch gequollener Beschaffenheit (Gelform) aus sauer-modifizierten Homo- oder Mischpolymeren des Acrylnitrils (PAC-Fraser) läßt sich vorteilhaft und farbecht mit löslichen Farbstoffen färben, welche in ihrem Molekül mehrere gegenüber den sauren Gruppen der Fasersubstanz basisch wirkende Gruppen, nämlich mehr als eine quartäre Gruppierung und/oder ungeladene, stark basische Gruppierung besitzen. Der Chromophor dieses Farbmittels kann dabei aus der Kategorie der Monoazo- oder Disazo-Farbstoffe, der Methin-, Azamethin- oder Diazamethin-Farbstoffe oder der Naphthalactam-Farbstoffe stammen.

Die Färbung des gelfeuchten Spinnguts wird erfindungsgemäß kontinuierlich oder diskontinuierlich aus einem lösungsmittelhaltigen Färbebad durchgeführt, welches neben Wasser noch Anteile eines organischen, speziell des zum Verspinnen des Polymers verwendeten Lösemittels aufweist; das Verstrecken der Fasern kann vor der Farbstoffapplikation, während des Färbevorganges selbst oder unmittelbar danach erfolgen.

Aufgrund ihrer besonderen Natur erbringen die kräftig fixierenden Farbstoffe des zuvor bezeichneten Typs bei der PAC-Gelfärbung optimale Fixierraten und verursachen in den anschließenden Produktionsstufen keine merkliche Anschmutzung der Maschinenteile und Arbeitsbäder, wie Streck- bzw. Nachbehandlungsbäder, durch ausgebluteten Farbstoff. Untersuchungen der Faserdurchfärbung, der Fixiergeschwindigkeit und der resultierenden Echtheitseigenschaften, wie Naßechtheit, zeigten keine Nachteile im Vergleich zu konventionellen Farbstoffen.

EP 0 044 061 A1

HOECHST AKTIENGESELLSCHAFT HOE 80/F 158 Dr.CZ/jk

# Verfahren zum Färben von Fasergut von aus organischen Lösemitteln versponnenen Acrylnitril-Polymerisaten im Gelzustand

Die vorliegende Erfindung betrifft das Färben im Zuge des Herstellungsprozesses von nach einem üblichen Naßspinnverfahren erzeugtem Fasergut, wie Faserbänder oder Fäden, aus sauer-modifizierten Polymeren oder Mischpolymeren des Acrylnitrils, im Gelzustand sowie gegebenenfalls vor der endgültigen Verstreckung, mit Lösungen von gegenüber den sauren Gruppen der Fasersubstanz sich basisch verhaltenden Farbstoffen, welche neben Wasser noch einen höheren Gehalt an einem organischen Lösemittel - speziell des zum Verspinnen des Polymers verwendeten Lösemittels - enthalten.

Es sind bereits verschiedene Verfahren zur Herstellung von kontinuierlich gefärbten, naßgesponnenen Acrylfasern im Rahmen des Spinn- und Streckprozesses beschrieben. So werden naßgesponnene Acrylfäden nach dem Waschen, vor oder nach der Verstreckung gefärbt, solange sie sich noch im gequollenen, nicht getrockneten Zustand befinden (FR-PS 980 700; JA-PS 24 495; US-PS 3 113 827). Andere Veröffentlichungen (CS-PS 104 915; US-PS 3 111 357; GB-PS 391 957) erläutern die Anfärbung naßgesponnener Acrylfäden während des Streckvorganges, wobei die Farbstoffaufnahme umso größer ist, je höher die Verstreckung vorgenommen wird. Besonders rasche Anfärbungen von naßgesponnenen Acrylfasern lassen sich erreichen, wenn man den Farbstoff direkt dem Koagulationsbad zusetzt, weil dann der Farbstoff sofort in die sich bildende Faser, deren Struktur noch locker ist, eindringen kann (US-PS 3 242 243 und CS-PS 95 939). Dieses unmittelbare Ausspinnen von Acrylfasern in ein Färbebad ist in der Technik als "Neochrome-Färbung" bekannt (Man-Made-Textiles, August 1966, Seite 58).

Ein großes Problem bei einer derartigen kontinuierlichen Gelfärbung ist allerdings die Konstanthaltung der Farbstoffkonzentration während des Färbeprozesses. Durch den Feuchtegehalt der Faserbänder bzw. Fäden wird nämlich ständig Wasser in die Flotte eingeschleppt und somit die Konzentration der Farbstofflösung entsprechend herabgesetzt. Dadurch werden Unegalitäten im Warenbild der solchermaßen erzeugten Färbung hervorgerufen.

Eine weitere Schwierigkeit beim Färben von naßgesponnenen Acrylfasern im Gelzustand ist das Erzielen guter Echtheitseigenschaften. Im Falle der Anwesenheit von höheren Anteilen an Lösemitteln bzw. Spinnbadflüssigkeit im Spinngut werden bei Einsatz üblicher basischer Farbstoffe zwar durch Diffusionsprozesse rasche und teilweise tiefe Anfärbungen bewirkt, doch neigen auf diese Weise gefärbte Fasern und Fäden dazu, in nachfolgenden Konfektionierungsprozessen, beispielsweise beim Dämpfen, Waschen, Ausrüsten und auch beim Verstrecken, stark auszubluten.

Dieser Befund bedeutet aber einen Farbstärkeverlust für das zu färbende Polymerisat und darüber hinaus auch einen Farbablauf, wenn zu Beginn einer Färbung noch farbstofffreie Streck-, Wasch- und Avivagebäder mit kationischen oder anionischen Weichmachern vorliegen. Unter den gegebenen Bedingungen haben diese Bäder nämlich die Tendenz, sich während des weiteren Produktionsprozesses mit Farbstoff aufzuladen. Außerdem ist bei Anwendung der bislang üblichen, stark ausblutenden Farbstoffe eine nicht unerhebliche Maschinenverschmutzung zu beobachten, was besonders stört, sofern die Färbeoperation auf eine andere Nuance umgestellt wird.

Die Gelfärbung von Fäden aus Acrylnitrilpolymerisaten im wäßrigen Medium stellt indessen ein aufwendiges Verfahren dar, für das eine spezielle Farbstoffauswahl erforderlich

ist. Nach den Angaben der DE-OS 20 43 090 hat man aber auch schon versucht, die Färbungen selbst aus einem reinen organischen Lösemittel oder einem Gemisch von mehreren organischen Lösemitteln durchzuführen und das gelfeuchte Fasergut mit in diesen Lösemitteln gelösten Farbstoffen bei Temperaturen unterhalb des Siedepunktes des Färbemediums behandelt. Die erzielten Färberesultate waren jedoch nicht zufriedenstellend.

Bekannt ist bei allen Färbeverfahren auf der zuvor erwähnten Grundlage die Verwendung von basischen Farbstoffen, welche nur eine einzige quartäre Gruppe oder nur eine einzige aliphatisch gebundene, primäre, sekundäre oder tertiäre Amino-, Guanidino- oder Hydrazinogruppe enthalten. Werden freilich derartige basische Farbstoffe zum Färben der in Rede stehenden Polymerisate im Gelzustand aus Färbebädern eingesetzt, welche neben Wasser noch größere Mengen eines organischen Lösungsmittels und zwar speziell des zum Verspinnen des Polymers verwendeten Lösungsmittels enthalten, dann beobachtet man nur eine mäßige Farbstoffaufnahme bzw. -Fixierung durch das Polymer, verglichen mit einer Färbung aus rein wäßrigem Bad. Je höher der Gehalt des organischen Lösungsmittels in der Flotte, desto niedriger wird die Farbstoffaufnahme und desto geringer ist die Naßechtheit dieser Färbungen.

Zweck und Aufgabe der vorliegenden Erfindung ist es nunmehr, die aufgezeigten Probleme im Zusammenhang mit der Gelfärbung auszuschalten, die geschilderten Mängel zu beseitigen und die sich gemäß den bisherigen Färbungen ergebenden, aber nicht ausreichenden Fixierungseigenschaften zu verbessern.

Diese Aufgabe wird erfindungsgemäß dadurch gelöst, daß man für die Gelfärbung der eingangs näher definierten Acrylfasern solche Farbstoffe verwendet, welche in ihrem Molekül mehr als eine sich gegenüber den sauren Gruppen der Fasersubstanz basisch verhaltende Gruppe aufweisen.

Diese für brauchbar erkannten Farbstoffe können beim beanspruchten Verfahren sowohl als Einzelfarbstoffe wie auch für Kombinationsfärbungen eingesetzt werden. Sie zeichnen sich durch eine rasche und starke Fixierung im Polymerisat aus, so daß die mit der herkömmlichen Arbeitsweise verbundenen Nachteile nicht mehr auftreten können. Es entstehen auch innerhalb von kurzen Färbezeiten über den gesamten Faserquerschnitt hinweg gleichmäßig durchgefärbte Fäden.

Die zuvor erläuterten, für die nach der vorliegenden Erfindung in Betracht gezogenen Farbstoffe als charakteristisches Merkmal angesehenen Gruppen können von gleicher Natur oder auch voneinander verschieden sein. Bei derartigen, sich gegenüber den sauren Gruppen der Fasersubstanz basisch verhaltenden Gruppen im Molekül der ausgewählten Farbstoffe handelt es sich im einzelnen
um mehr als eine quartäre Gruppe,
oder um eine quartäre Gruppe und zusätzlich eine oder mehrere aliphatisch gebundene, primäre, sekundäre oder tertiäre Amino-, Guanidino-, Amidino- oder Hydrazinogruppen,
oder um mehr als eine aliphatisch gebundene, primäre, sekundäre oder tertiäre Amino-, Guanidino-, Amidino- oder Hydrazinogruppe.

Solche aufgrund der Anwesenheit von quartären Gruppen im Molekül verfahrensgemäß als geeignet gefundene basische Farbstoffe verkörpern Verbindungen von salzartigem Aufbau und bestehen aus Farbstoff-Kation $F^{(+)}$, welches den chromophoren Bestandteil darstellt und das im Vergleich zum Farbstoff-Anion $X^{(-)}$, welches hauptsächlich für die Löslichkeit des Produktes verantwortlich ist, den verhältnismäßig größeren Teil des Moleküls (höheres Kationgewicht) ausmacht.

Als quartäre Gruppen für basische Farbstoffe dieses Typs kommen beispielsweise Ammoniumgruppen in Frage, wie beispielsweise eine Trialkylammoniumgruppe mit niederen Alkylresten, die gegebenenfalls substituiert sein können, des weiteren eine N,N-Dialkyl-N-aryl-ammoniumgruppe mit gegebenenfalls substituierten niederen Alkylresten, eine N,N-Dialkyl-N-aralkyl-ammoniumgruppe mit niederen, gegebenenfalls substituierten Alkylgruppen, sowie eine N-Monoalkyl-N-aryl-N-aralkyl-ammoniumpgruppe mit einer niederen, gegebenenfalls substituierten Alkylgruppe; diese Ammoniumgruppen sind entweder direkt oder über einen gegebenenfalls Heteroatome und/oder kleine organische Gruppierungen als Brückenglied aufweisenden aliphatischen Rest an den aromatischen Teil des chromophoren Systems gebunden, wie beispielsweise an einen Benzol- oder Naphthalinkern; sofern in diesen Ammoniumgruppen mehrere Substituenten aus der gleichen Kategorie am selben Stickstoffatom vorhanden sind, dann können diese sowohl identisch als auch unterschiedlich voneinander sein.
Quartäre Gruppen der erfindungsgemäß verwendbaren Farbstoffe sind weiterhin niedere Dialkylhydrazoniumgruppen und Cyclammonium-Reste, vorzugsweise aromatischen Charakters, insbesondere mesomere 5- oder 6-gliedrige, positiv geladene Ringe, die noch weitere Heteroatome, wie Sauerstoff-, Schwefel- und/oder Stickstoffatome enthalten können.

Diese Cyclammoniumreste können Bestandteil des chromophoren Systems sein oder an einen aromatischen carbocyclischen Rest, wie einen Benzolkern oder Naphthalinkern, direkt gebunden oder an diesen ankondensiert sein. Cyclammonium-

Reste und deren Derivate sind beispielsweise Pyridinium-, Pyrazolium-, Imidazolium-, Triazolium-, Tetrazolium-, Oxazolium-, Thiazolium-, Isothiazolium-, Oxdiazolium-, Thiadiazolium-, Isothiadiazolium-, Chinolinium-, Indolium-, Indazolium-, Benzimidazolium-, Benztriazolium-, Benzisothiazolium-, Benzthiazolium-, Arylguanazolium- oder Benzoxazolium-Reste, wobei diese Reste in den Heterocyclen bevorzugt durch niedere, gegebenenfalls substituierte Alkylreste, durch Aralkyl-, Aryl- und/oder Cycloalkyl-Reste substituiert sein können und in den aromatischen carbocyclischen Teilen durch quartäre, wie beispielsweise die oben erwähnten, durch andere basische und/oder nicht-ionogene Gruppen substituiert sein können;
solche basische Gruppen (ohne quartäre Ladung) sind beispielsweise primäre, sekundäre oder tertiäre Aminogruppen, Hydrazino-, Guanidino- oder Amidinogruppen, des weiteren heterocyclische, stickstoffhaltige Ringe, wie beispielsweise der Pyridin-, Imidazol-, Morpholin-, Piperidin- oder Piperazin-Ring,
und nicht-ionogene Gruppen sind beispielsweise Halogenatome, wie Chlor- oder Bromatome, niedere, gegebenenfalls substituierte Alkylgruppen, niedere Alkoxygruppen, die Nitrogruppe, die Sulfamoyl- oder Carbamoylgruppe, eine durch niederes Alkyl, Phenyl und/oder Benzyl substituierte Sulfamoyl- oder Carbamoylgruppe, niedere Carbalkoxy-, niedere Alkylsulfon- und niedere Alkanoylaminogruppe, die Benzoylaminogruppe, die Trifluormethyl- und Cyangruppe.

Im Vorstehenden wie im folgenden bedeuten:
Die Angabe "nieder", daß der durch diese Spezifizierung näher charakterisierte Alkyl-, Alkylen- oder Alkoxyrest aus 1 - 4 C-Atomen besteht;
die Angabe "substituierter Alkylrest", daß das Alkyl durch einen oder zwei, bevorzugt einen Substituenten aus der Gruppe Hydroxy, Acetyloxy, niederes Alkoxy, Cyan, niederes

Carbalkoxy, wie Carbomethoxy und Carboäthoxy, Chlor, Phenyl und Carbamoyl substituiert ist, wobei darüber hinaus das Phenyl selbst noch durch Halogen, wie Chlor, Brom oder Fluor, niederes Alkyl, niederes Alkoxy, Nitro, Acetylamino, Sulfamoyl und/oder Carbamoyl substituiert sein kann und das Carbamoyl seinerseits noch durch niederes Alkyl, eine Phenylgruppe oder einen Benzylrest mono- oder disubstituiert sein kann; ein in diesem Sinne substituierter Alkylrest ist somit beispielsweise eine ß-Hydroxyäthyl-, ß-Cyanäthyl-, ß-Acetoxyäthyl-, γ-Hydroxypropyl-, ß-Methoxyäthyl-, Benzyl- oder Phenäthylgruppe;
die Angabe "Aryl" einen Arylrest, insbesondere einen Phenyl- oder Naphthylrest, der noch durch die oben angegebenen quartären, basischen oder nicht-ionogenen Gruppen substituiert sein kann; nicht-ionogene Substituenten, von denen bevorzugt 1 bis 3 in dem Arylrest enthalten sein können, sind insbesondere Halogen, wie Chlor oder Brom, niederes Alkyl, wie Methyl oder Äthyl, niederes Alkoxy, wie Methoxy, Äthoxy oder Propoxy, Nitro, niederes Alkylsulfon und Trifluormethyl;
die Angabe "Aralkyl" einen niederen Alkylrest, der durch einen Arylrest substituiert ist, wobei der Arylrest die obengenannte Bedeutung hat; bevorzugt ist der Arylrest im "Aralkyl" ein Phenylrest, der durch 1 oder 2 Substituenten aus der Gruppe niederes Alkyl, niederes Alkoxy und Chlor substituiert sein kann;
die Angabe "Cycloalkyl" einen Cycloalkylrest von 4 - 12 Ring-C-Atomen, wie der Cyclopentyl- oder Cyclohexylrest, der noch durch 1 - 3 niedere Alkylgruppen, wie Methylgruppen, substituiert sein kann.

Niedere Alkylgruppen (Alkylreste) sind insbesondere die Methyl- und Äthylgruppe, niedere Alkoxygruppen insbesondere die Methoxy- und Äthoxygruppe, Aralkylreste sind insbesondere die Benzyl- und Phenäthylgruppe.

Als (quartäre) Ammoniumgruppen sind bevorzugt die Trimethylammoniumgruppe, die Triäthylammoniumgruppe, die Dimethyl-äthyl-ammoniumgruppe, die Benzyl-dimethyl-ammoniumgruppe und die Phenyl-dimethyl-ammoniumgruppe zu nennen.

Niedere, substituierte Alkylreste, die mit dem Alkyl an ein Stickstoffatom gebunden sind, sind bevorzugt Alkylgruppen von 1 - 4 C-Atomen, die durch eine Hydroxy-, niedere Alkoxy-, Cyan- oder Phenylgruppe substituiert sind, wie beispielsweise die ß-Hydroxyäthyl-, ß-Cyanäthyl-, ß-Methoxyäthyl-, die Benzyl- oder Phenäthylgruppe.

Die gemäß der vorliegenden Erfindung verwendbaren basischen Farbstoffe von quartärer Natur enthalten als Anion $X^{(-)}$ vorzugsweise das Anion einer starken anorganischen oder organischen Säure, wie der Schwefelsäure oder deren (niederes Alkyl)-Halbester (= niederes Alkosulfat), der Salzsäure, der Phosphorsäure, der Perchlorsäure, der Tetrafluoroborsäure, Rhodanwasserstoffsäure, Essigsäure, Chloressigsäure, Trichloressigsäure, Ameisensäure, Oxalsäure, Milchsäure, Propionsäure oder Malonsäure. Ferner können die Farbstoffe als Chloride in Form ihrer Doppelsalze mit Zinkchlorid vorliegen. Die Art des Anions ist für die coloristischen Eigenschaften der erfindungsgemäß verwendeten Farbstoffe ohne Belang, soweit es sich um farblose Anionen handelt. Bei geringem gewichtsmäßigen Anteil des Anions werden Färbungen mit besonders hoher Farbstärke erzielt. Außerdem soll das Anion so ausgesucht werden, daß das entstehende Farbstoffsalz wasserlöslich ist.

Insbesondere bedeutet $X^{(-)}$ das Äquivalent des Sulfat-, Phosphat-, Oxalat- oder Tetrachlorozinkat-Anions; oder das Chlorid-, Bromid-, Tetrafluoroborat-, Rhodanid-, Acetat-, Monochloracetat-, Trichloracetat-, Trichlorozinkat-Anion oder das Alkosulfat-Anion mit einer niederen Alkylgruppe, wie das Methosulfat- oder Äthosulfat-Anion.

Von den erfindungsgemäß verwendbaren Farbstoffen sind solche quartäre Farbstoffe hervorzuheben, deren kationische Ladung delokalisiert ist, was durch verschiedene mesomere Grenzstrukturen formelmäßig ausgedrückt werden kann.

Insbesondere vorteilhaft gestaltet sich das beanspruchte Verfahren auch mit erfindungsgemäß verwendbaren Farbstoffen, die neben der oder den quartären Gruppen noch eine oder mehrere andere, stark basische Gruppen besitzen. Solche stark basische Gruppen (ohne quartäre Ladung) sind beispielsweise primäre, sekundäre oder tertiäre Aminogruppen, die über einen gegebenenfalls Heteroatome und/oder kleine organische Gruppierungen als Brückenglied aufweisenden aliphatischen Rest an den Farbstoffchromophor gebunden sind, weiterhin Hydrazino-, Guanidino- oder Amidinogruppen; die Aminogruppen können auch Teil eines heterocyclischen Ringes sein, so beispielsweise des Pyridin-, Imidazol-, Morpholin-, Piperidin- oder Piperazinringes. Sekundäre Aminogruppen sind bevorzugt niedere Monoalkylaminogruppen, Aryl- oder Aralkylaminogruppen, wie beispielsweise die Methylamino-, Äthylamino- oder iso-Propylaminogruppe oder die Phenylamino- oder p-Methyl-phenylamino-Gruppe. Tertiäre Aminogruppen sind beispielsweise die Dimethylamino-, Diäthylamino-, N-Methyl-anilino-, N-Äthyl-anilino- oder N-Methyl-benzylamino-Gruppe.

Heteroatome und kleinere organische Gruppierungen, die eben und weiter zuvor als Brückenglied erwähnt wurden und über welche die Amino- oder Ammoniumgruppen mittels aliphatischer Reste an einen aromatischen Ring des Farbstoffmoleküls gebunden sein können, sind beispielsweise Gruppen der Formeln -O-, -NH-, -N(niederes Alkyl)-, -CO- oder $-SO_2-$;
die aliphatischen Ketten ihrerseits sind z. B. $-CH_2-$, $-CH_2-CH_2-$, $-CH_2-CH_2-CH_2-$ oder $-CH_2-CH(OH)-CH_2-$;

und Kombinationen davon miteinander sowie untereinander, wie besonders auch solche, die aus den Beispielen ersichtlich sind.

Farbstoffe, die selbst keine quartäre Gruppe, wohl aber mehr als eine stark basische Gruppe (ohne quartäre Ladung) vom vorstehend erläuterten Typ enthalten, über ein aliphatisches Zwischenglied (wie oben) an den Farbstoffchromophor gebunden, lassen sich ebenfalls beim neuen Färbeverfahren einsetzen.

Die erfindungsgemäß eingesetzten, stark und schnell in dem Polymer fixierenden basischen Farbstoffe können den verschiedensten Farbstoffklassen angehören, so insbesondere der Klasse der Monoazofarbstoffe, der Disazofarbstoffe, der Methin-, Azamethin- und Diazamethin-Farbstoffe und der Naphthalactam-Farbstoffe.

Von den erfindungsgemäß verwendbaren basischen Monoazofarbstoffen sind insbesondere Farbstoffe der allgemeinen Formel (1)

$$\left[ D^{(+)} - N = N - K \right] X^{(-)}$$ oder 2 $X^{(-)}$, falls K eine quartäre Gruppe enthält, (1)

zu nennen, in welcher

$D^{(+)}$ den Rest einer aromatischen carbo- oder heterocyclischen Diazokomponente bedeutet, die eine der obengenannten quartären Gruppen besitzt, wobei $D^{(+)}$ insbesondere einen Pyrazolium-, Triazolium-, Thiazolium-, Thiadiazolium-, Indazolium-, Benztriazolium-, Benzimidazolium-, Benzthiazolium- oder Benzisothiazolium-Rest darstellt und diese Cyclammoniumgruppen sowie der gegebenenfalls daran ankondensierte aromatische carbocyclische Rest, wie anfangs beschrieben, substituiert sein können, oder $D^{(+)}$ ein aromatischer carbo- oder heterocyclischer Rest ist mit einer direkt an ihn gebundenen oder, wie beispielsweise oben erwähnt, mit einer über ein Brückenglied an ihn gebundenen (quartären) Ammoniumgruppe, wie insbesondere einer Trialkylammonium- oder Dialkylhydrazoniumgruppe, wobei diese aromatischen Reste insbesondere Reste des Benzols, Naphthalins und Benzthiazols sind;
K den Rest einer aromatischen carbo- oder heterocyclischen Kupplungskomponente darstellt, insbesondere aus der Benzol-, Naphthalin- oder Indolreihe, bevorzugt aus der N,N-Dialkyl-aminobenzol- und N,N-Dialkyl-aminonaphthalin-, der N-Alkyl-N-aralkyl-aminobenzol- und -naphthalin-, der N,N-Bis-(aralkyl)-aminobenzol- und -naphthalin-, der N-Alkyl-N-arylaminobenzol- und der N-Alkylindol-Reihe, wobei die aromatischen carbocyclischen Reste der Kupplungskomponente K bevorzugt durch 1, 2 oder 3 Substituenten aus der Gruppe niederes Alkanoylamino, Benzoylamino, niederes Alkyl, niederes Alkoxy, Nitro, Hydroxy, Amino, niederes Alkylamino, niederes Dialkylamino, Chlor und Trifluormethyl substituiert sein können. Dieser Rest der Kupplungskomponente K weist seinerseits mindestens eine, an den aromatischen Kern direkt oder über ein Brückenglied (wie beispielsweise oben erwähnt), aliphatisch gebundene primäre, sekundäre oder tertiäre Aminogruppe oder eine (quartäre) Ammoniumgruppe auf, die gegebenenfalls Bestandteil eines 5- oder 6-gliedrigen, aromatischen heterocyclischen Ringes (z. B. Cyclammoniumrestes), eines Amidins, Guanidins, Hydrazins oder eines Thiuroniumrestes sein können; bevorzugt gebunden sind diese basischen Radikale über den Alkylrest einer niederen N-Alkylaminogruppe (Brückenglied) als Substituent am aromatischen Kern von K, während gegebenenfalls eine dort vorhandene zweite niedere N-Alkylaminogruppe im Alkylrest durch Chlor, Hydroxy, niederes Alkoxy, Aryloxy, Cyan, Acylamino, wie niederes Alkanoylamino oder Benzoylamino, oder durch niederes Carbalkoxy substituiert sein kann;

und $X^{(-)}$ als Äquivalent eines Anions die weiter oben angegebene Bedeutung hat.

Von den erfindungsgemäß verwendbaren basischen Monoazofarbstoffen sind bevorzugt auch diejenigen der allgemeinen Formeln (2a), (2b) und (2c)

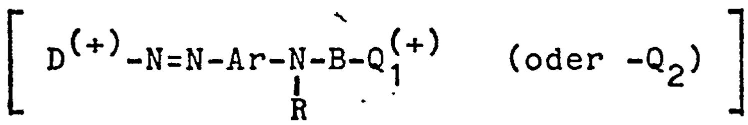
$2\ X^{(-)}$ oder $X^{(-)}$ (2a)

$$\left[ D^{(+)}\text{-N=N-Ar-O-B-}Q_1^{(+)} \quad (\text{oder } -Q_2) \right] \quad 2\ X^{(-)} \text{ oder } X^{(-)} \qquad (2b)$$

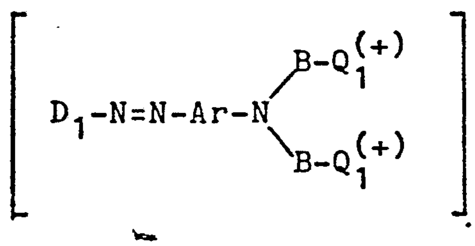
$2\ X^{(-)}$ (2c)

zu nennen, in welchen die einzelnen Formelreste folgendermaßen definiert sind:

$D^{(+)}$ wie oben angegeben;

$D_1$ ist der Rest einer aromatischen carbo- oder heterocyclischen Diazokomponente, insbesondere aus der Benzol- oder Naphthalinreihe, der die obengenannten basischen (ohne quartäre Ladung) und/oder nicht-ionogenen Substituenten enthalten kann, wobei $D_1$ bevorzugt der Phenyl- oder Naphthalinrest ist, der durch 1 - 3 Substituenten aus der Gruppe niederes Alkyl, niederes Alkoxy, Fluor, Chlor, Brom, niederes Alkanoylamino, Benzoylamino, Nitro, Cyan, niederes Alkylsulfon, Phenylsulfon, Trifluormethyl, Carbamoyl, Sulfamoyl, durch niederes Alkyl, Phenyl und/oder Benzyl substituiertes Carbamoyl oder Sulfamoyl, und niederes Carbalkoxy substituiert sein kann;

Ar ist ein p-Phenylen- oder 1,4-Naphthylen-Rest, der durch 1 oder 2 Substituenten aus der Gruppe niederes Alkyl, wie Methyl oder Äthyl, niederes Alkoxy, wie Methoxy oder Äthoxy, Halogen, wie Chlor oder Brom, Nitro, niederes Alkanoylamino, wie Acetylamino, und Trifluormethyl substituiert sein kann;

R ist ein Wasserstoffatom oder ein niederer, gegebenenfalls substituierter Alkylrest, ein Aralkyl- oder Cycloalkylrest;

B stellt ein zweiwertiges aliphatisches Brückenglied dar, insbesondere einen Alkylenrest von 1 - 6 C-Atomen, bevorzugt von 2 - 4 C-Atomen, hauptsächlich den Äthylen- oder Propylenrest, oder einen niederen Alkenylenrest, wie den Vinylenrest, wobei ein solches Alkylenbrückenglied B seinerseits substituiert oder über kleinere organische Gruppierungen, wie -CO-, -O-CO-, Phenoxy oder $-SO_2-$, an das Stickstoffatom der Arylaminogruppe oder an $Q_1^{(+)}$ bzw. $Q_2$ gebunden sein kann;

$Q_1^{(+)}$ ist eine (quartäre) Ammoniumgruppe, insbesondere eine niedere Trialkylammonium-, niedere N,N-Dialkyl-N-aryl-bzw. -N-aralkylammonium-, niedere Dialkyl-hydrazonium-Gruppe oder ein Cyclammoniumrest, insbesondere von diesem ein Pyridinium- oder Imidazolium-Rest obiger Bedeutung, wobei die Alkylreste am Stickstoffatom gegebenenfalls substituiert sind;

$Q_2$ steht für eine primäre, sekundäre oder tertiäre Aminogruppe, die Bestandteil eines 5- oder 6-gliedrigen, aromatischen heterocyclischen Ringes sein können, oder eine Amidino-, Guanidino- oder Hydrazinogruppe, vorzugsweise Dialkylaminogruppen, welche im Alkylrest substituiert sein können;

und $X^{(-)}$ hat die obengenannte Bedeutung.

Von den erfindungsgemäß verwendbaren basischen Disazofarbstoffen sind insbesondere die der allgemeinen Formeln (3a) und (3b)

$$\left[ Q_1^{(+)}\text{-B-}\underset{\textstyle R}{\underset{|}{N}}\text{-Ar-N=N-}A_1\text{-N=N-Ar-}\underset{\textstyle R}{\underset{|}{N}}\text{-B-}Q_1^{(+)}\ (\text{oder } -Q_2) \right] \begin{matrix} 2\ X^{(-)} \\ \text{oder } X^{(-)} \end{matrix}$$

(3a)

$$\left[ (Q_2\text{- oder})\ Q_1^{(+)}\text{-B-}\underset{\textstyle R}{\underset{|}{N}}\text{-Ar-N=N-}A_2^{(+)}\text{-N=N-Ar-}\underset{\textstyle R}{\underset{|}{N}}\text{-B-}Q_1^{(+)}(\text{oder } -Q_2) \right] \begin{matrix} 3\ X^{(-)} \\ \text{oder } 2\ X^{(-)} \\ \text{oder } X^{(-)} \end{matrix}$$

(3b)

zu nennen, in welchen Ar, B, R, $Q_1^{(+)}$, $Q_2$ und $X^{(-)}$ die für Formel (1) bzw. (2) genannten Bedeutungen haben, wobei die in den Formeln (3) jeweils zweifach auftretenden Formelreste jeweils gleich oder verschieden voneinander sein können;

$A_1$ den Rest einer aromatischen carbocyclischen oder aromatischen heterocyclischen Tetrazokomponente bedeutet, insbesondere aber den Phenylenrest, den Naphthylenrest oder den Diphenylenrest oder einen der Reste der Formeln

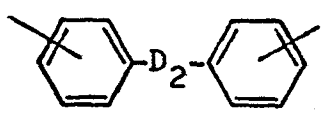

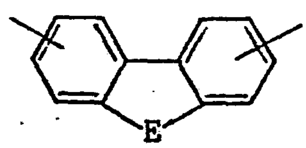

wobei die aromatischen Kerne in den zuvor herausgestellten Gliedern sowie in diesen beiden Formeln durch Substituenten, vorzugsweise 1 oder 2 Substituenten, aus der Gruppe niederes Alkyl, wie Methyl, niederes Alkoxy, wie Methoxy, und Chlor substituiert sein können;

$A_2^{(+)}$ den Rest einer aromatischen carbocyclischen oder aromatischen heterocyclischen Tetrazokomponente mit mindestens einer quartären Gruppierung darstellt, die insbesondere Bestandteil eines 5- oder 6-gliedrigen heterocyclischen Ringes ist und wobei die heterocyclischen und/oder

carbocyclischen Teile gegebenenfalls substituiert sind; $D_2$ ein aliphatisches oder aromatisches carbocyclisches oder aromatisches heterocyclisches oder aus einfachen Atomgruppierungen bestehendes Brückenglied ist, beispielsweise eines der Formeln $-CH_2-$, $-CH_2CH_2-$, $-O-CH_2-CH_2-O-$, $-CH{=}CH-$, $-NH-$, $-O-$, $-S-$, $-SO_2-$, $-N{=}N-$, $-NH-CO-NH-$, $-CO-NH-$, $-NH-CO-$, der Rest der Formel

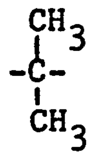 oder ein Cyclohexylenrest, oder

ein heterocyclischer Rest, beispielsweise der Formeln

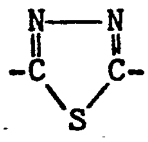, 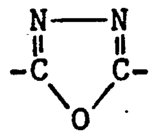, 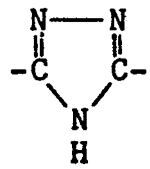 oder 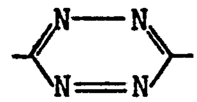 ,

vorzugsweise jedoch ein Brückenglied der Formel $-CH_2-$, $-CH_2-CH_2-$, $-CH{=}CH-$, $-NH-$, $-SO_2-$, $-CO-NH-$ oder $-NH-CO-$ ist; und worin E für ein zweiwertiges Brückenglied der Formel $-O-$, $-S-$, $-NH-$ oder $-SO_2-$ steht.

In den zuvor erläuterten Disazofarbstoffen gemäß den allgemeinen Formeln (3a) und (3b) können die Formelreste $Q_1^{(+)}$ sowie $Q_2$ - beide zusammen oder jeder einzeln für sich allein - auch direkt oder lediglich über das Brückenglied B an den jeweils zugehörigen Arylenrest Ar gebunden sein, wobei dann jedoch als Auswahlregel gilt, daß ein in Formel (3a) gegebenenfalls vorhandener Rest $Q_2$ nicht unmittelbar mit Ar verbunden sein kann und daß entsprechend Formel (3b) im Falle von zwei beiderseitig an die Ar direkt gebundenen Resten $Q_2$ der Rest der Tetrazokomponente $A_2^{(+)}$ mehr als eine quartäre Gruppierung aufweisen muß.

Von den erfindungsgemäß verwendbaren basischen Disazofarbstoffen sind weiterhin insbesondere die der allgemeine Formeln (4a) und (4b)

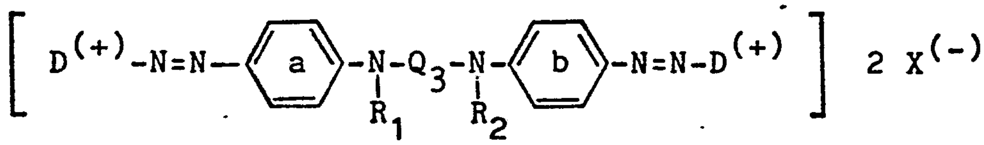
(4a)

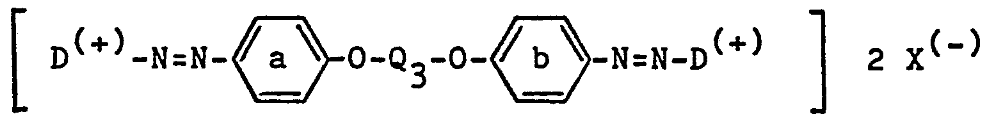
(4b)

zu nennen, in welchen $D^{(+)}$ gleich oder verschieden sind und jedes die oben genannte Bedeutung hat;

$Q_3$ eine niedere Alkylengruppe, wie beispielsweise eine Äthylen- oder Propylengruppe, eine niedere Alkylen-oxy-alkylen-Gruppe, wie beispielsweise eine Äthylen-oxy-äthylengruppe, oder eine niedere Alkylen-amino-alkylen-Gruppe, wie eine Diäthylenamino-Gruppe, bedeutet oder eine Alkylengruppe von 2 bis 8 C-Atomen ist, die durch zwei Aminogruppen oder Sauerstoffatome unterbrochen ist, wie eine Dioxy-triäthylen-Gruppe, oder eine niedere Alkylengruppe ist, die gegebenenfalls substituiert ist oder durch einen aromatischen carbocyclischen Rest, wie einen Benzolkern oder Naphthalinkern, beispielsweise durch den m- oder p-Xylylenrest, durch -O-CO-, -N(Alkyl) oder -N(Phenyl)- unterbrochen sein kann, oder eine niedere Alkenylengruppe ist;

$R_1$ und $R_2$ gleich oder verschieden sind und jedes ein Wasserstoffatom oder eine niedere, gegebenenfalls substituierte Alkylgruppe darstellt, oder $R_1$ und $R_2$ zusammen mit den beiden Stickstoffatomen und dem Rest $Q_3$ einen heterocyclischen Ring bilden, wie beispielsweise einen Piperazinring;

die Benzolkerne a und b jeweils durch einen oder zwei Substituenten aus der Gruppe niederes Alkyl, niederes Alkoxy, Halogen, Trifluormethyl und niederes Alkanoylamino gleich oder verschieden substituiert sein können, oder die Kerne

a oder b oder beide jeweils mit einem ankondensierten Benzolkern einen Naphthalinrest bilden; und $X^{(-)}$ die obengenannte Bedeutung hat.

Von den erfindungsgemäß verwendbaren basischen Methinfarbstoffen sind insbesondere die der allgemeinen Formel (5)

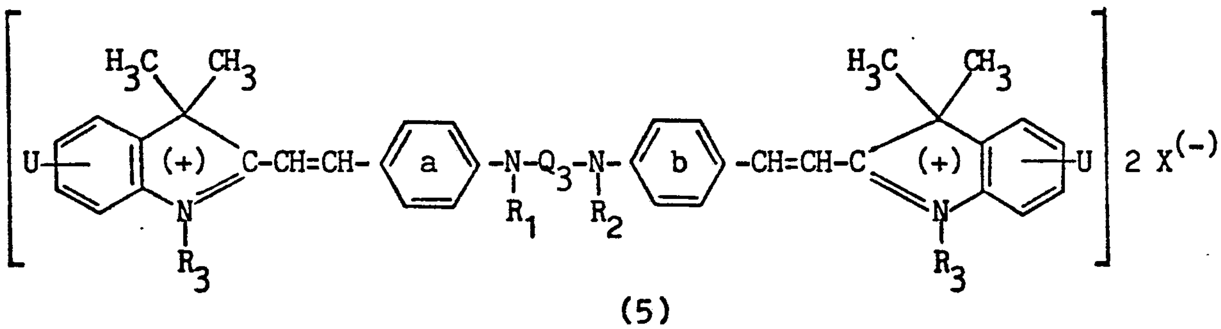

(5)

hervorzuheben, in welcher $R_1$, $R_2$, $Q_3$, $X^{(-)}$ sowie die Benzolkerne a und b die oben genannten Bedeutungen haben; $R_3$ einen niederen, gegebenenfalls substituierten Alkylrest oder einen Aralkylrest, z. B. den Benzyl- oder Phenäthylrest, bedeutet; und U beide gleich oder verschieden sind und jedes für ein Wasserstoffatom, ein Halogenatom, wie ein Chlor- oder Bromatom, eine niedere Alkylgruppe, wie Methyl- oder Äthylgruppe, eine niedere Alkoxygruppe, wie Methoxy- oder Äthoxygruppe, eine Nitrogruppe, eine Aryloxygruppe, wie eine Phenoxygruppe, eine Aralkoxygruppe, wie eine Benzyloxy- oder Phenäthoxygruppe, oder eine niedere Carbalkoxygruppe, wie eine Carbomethoxy- oder Carbäthoxygruppe, steht.

Als erfindungsgemäß verwendbare basische Farbstoffe sind insbesondere Azamethinfarbstoffe der Formel (6)

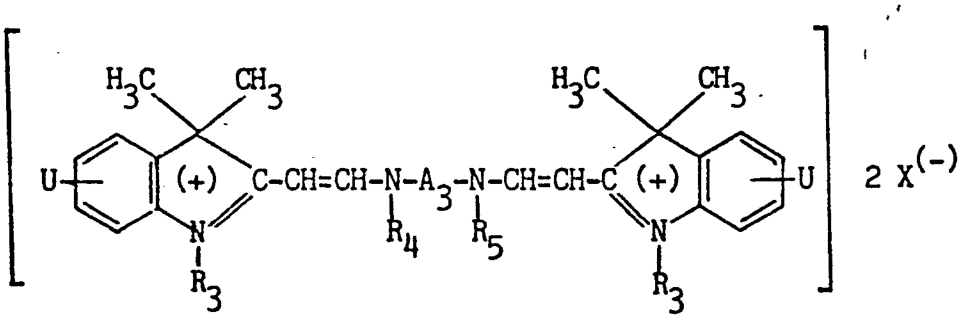

(6)

und Diazamethinfarbstoffe der Formel (7)

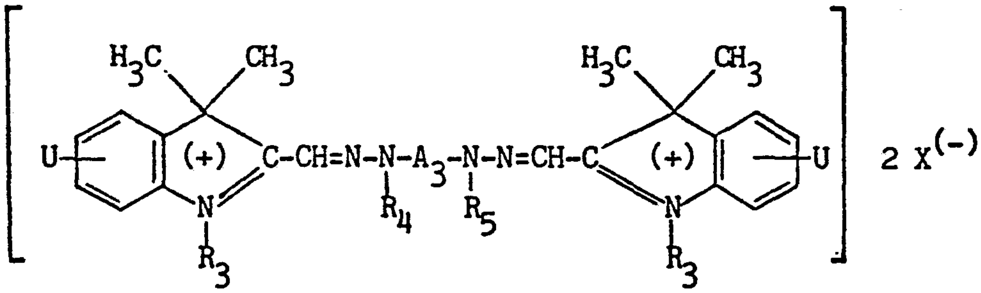 (7)

hervorzuheben, in welchen $R_3$, U und $X^{(-)}$ die oben genannten Bedeutungen haben;

$R_4$ und $R_5$ gleich oder verschieden sind und jedes ein Wasserstoffatom oder eine niedere, gegebenenfalls substituierte Alkylgruppe ist;

und $A_3$ einen bivalenten Rest bedeutet, der aus einem oder mehreren aromatischen carbo- oder heterocyclischen Kernen besteht, die noch durch nicht-aromatische Brückenglieder miteinander verbunden sein können.

Der bivalente Rest $A_3$ ist beispielsweise der bivalente Rest des Benzols, Naphthalins, Diphenyls, des Glykoldiphenyläthers, des Diglykoldiphenyläthers, eines niederen Diphenylalkans, des Diphenyläthers, des Diphenylsulfids, des Diphenylsulfons, des Diphenylketons, des Azobenzols und des Diphenylharnstoffs, wobei die Benzolkerne in diesen Resten jeweils noch durch 1 oder 2 Substituenten, bevorzugt aus der Gruppe niederes Alkyl, niederes Alkoxy, Halogen, wie Brom und insbesondere Chlor, Carbamoyl und Sulfamoyl substituiert sein können, oder $A_3$ ist beispielsweise der bivalente Rest des 2-Phenylbenzimidazols, des 2-Phenylbenzthiazols, des 2-Phenylbenzoxazols oder des Diphenyl-oxadiazols, wobei der heterocyclische Ring noch durch niedere Alkylgruppen substituiert sein kann, oder $A_3$ ist der bivalente Rest der Formel

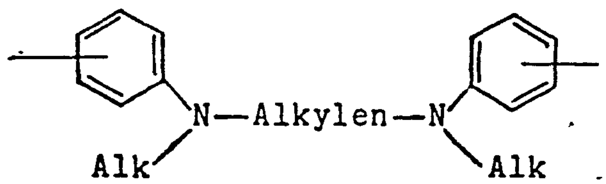

in welcher Alk die Bedeutung eines niederen Alkylrestes hat und Alkylen für ein geradkettiges oder verzweigtes Alkylen-Brückenglied steht.

Besonders vorteilhaft gestaltet sich das erfindungsgemäße Verfahren unter der Verwendung von bis-quartären Farbstoffen,

insbesondere von bis-quartären Disazo-Farbstoffen der allgemeinen Formel (4a), in welcher $D^{(+)}$ gleich oder verschieden sind und jedes einen weiter oben erwähnten Triazolium-, Benzthiazolium- oder Thiazolium-Rest darstellt, $Q_3$ eine Alkylengruppe von 2 bis 4 C-Atomen ist, $R_1$ und $R_2$ gleich oder verschieden sind und jedes für eine niedere, gegebenenfalls substituierte Alkylgruppe, vorzugsweise ein Wasserstoffatom steht und die Benzolkerne a und b sowie $X^{(-)}$ die obengenannten Bedeutungen aufweisen,

des weiteren von bis-quartären Methin-, Azamethin- und Diazamethin-Farbstoffen der allgemeinen Formeln (5), (6) und (7), in welchen $Q_3$, $R_1$, $R_2$, a und b sowie $X^{(-)}$ die eben zuvor genannten Bedeutungen haben und $A_3$, $R_3$, $R_4$, $R_5$ und U die für die Formeln (5), (6) und (7) angegebenen Bedeutungen besitzen.

Das Verfahren nach der vorliegenden Erfindung läßt sich ebenfalls durchführen unter Einsatz von Methinverbindungen der allgemeinen Formel (8)

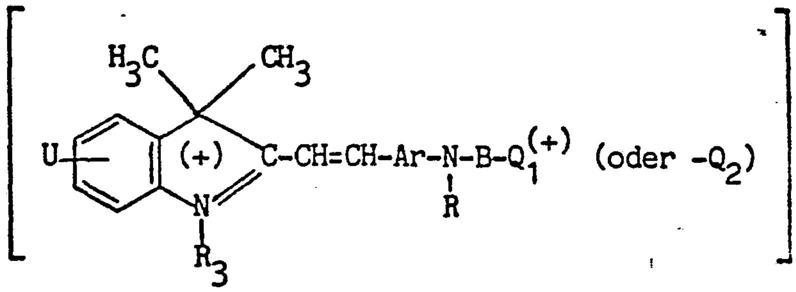

$2\ X^{(-)}$ oder $X^{(-)}$ (8)

worin Ar, B, R, $R_3$, $Q_1^{(+)}$, $Q_2$, U und $X^{(-)}$ die oben genannten Bedeutungen zukommen.

Weiterhin sind als erfindungsgemäß verwendbare Farbstoffe insbesondere Azamethin- und Diazamethin-Verbindungen der allgemeinen Formel (9)

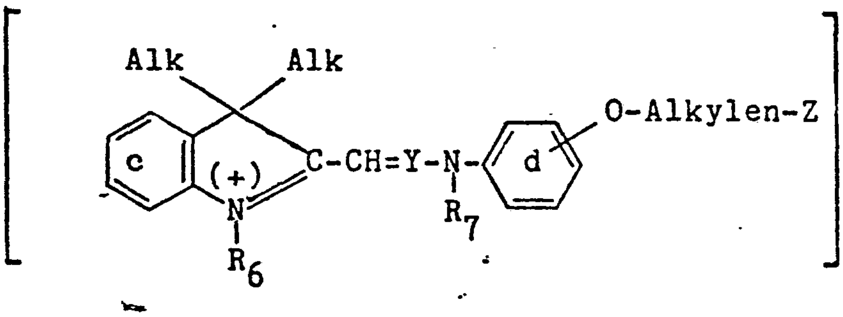

(9) $n\ X^{(-)}$

zu nennen. In der Formel (9) bedeuten:

$R_6$ ist eine Alkylgruppe von 1 bis 4 C-Atomen, die substituiert sein kann, beispielsweise durch eine Carbamoylgruppe ($-CONH_2$), eine Alkanoyloxygruppe von 1 bis 4 C-Atomen, eine Carbalkoxygruppe mit 1 bis 4 C-Atomen im Alkylrest, eine Hydroxy-, Cyan- oder Phenylgruppe;

Alk ist eine Alkylgruppe von 1 bis 4 C-Atomen, wobei beide gleich oder verschieden voneinander sein können;

Y ist der Methinrest (CH) oder ein Stickstoffatom;

$R_7$ ist ein Wasserstoffatom oder eine Alkylgruppe von 1 bis 4 C-Atomen, die substituiert sein kann, beispielsweise durch eine Carbamoylgruppe, eine Alkanoyloxygruppe von 1 bis 4 C-Atomen, eine Carbalkoxygruppe mit 1 bis 4 C-Atomen

im Alkylrest, eine Hydroxy-, Cyan- oder Phenylgruppe; Alkylen ist eine geradkettige oder verzweigte Alkylengruppe von 2 bis 6 C-Atomen;
Z ist eine Gruppe der Formel (9a) oder (9b)

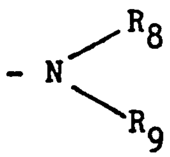 (9a) 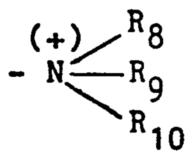 (9b)

in welchen
$R_8$ eine Alkylgruppe von 1 bis 4 C-Atomen ist, die substituiert sein kann, beispielsweise durch eine Carbamoylgruppe, eine Alkanoyloxygruppe von 1 bis 4 C-Atomen, eine Carbalkoxygruppe mit 1 bis 4 C-Atomen im Alkylrest, eine Hydroxy-, Cyangruppe oder Phenylgruppe,
$R_9$ eine Alkylgruppe von 1 bis 4 C-Atomen ist, die substituiert sein kann, beispielsweise durch eine Carbamoylgruppe, eine Alkanoyloxygruppe von 1 bis 4 C-Atomen, eine Carbalkoxygruppe mit 1 bis 4 C-Atomen im Alkylrest, eine Hydroxy-, Cyan- oder Phenylgruppe, oder der Phenylrest ist, der durch 1 oder 2 Substituenten aus der Gruppe Chlor, Alkyl von 1 bis 4 C-Atomen, Alkoxy von 1 bis 4 C-Atomen, Nitro, Carbalkoxy mit 1 bis 4 C-Atomen im Alkylrest und Carbamoyl substituiert sein kann, und
$R_{10}$ ein Wasserstoffatom oder eine Alkylgruppe von 1 bis 4 C-Atomen ist, die substituiert sein kann, beispielsweise durch eine Carbamoylgruppe, eine Alkanoyloxygruppe von 1 bis 4 C-Atomen, eine Carbalkoxygruppe mit 1 bis 4 C-Atomen im Alkylrest, eine Hydroxy-, Cyan- oder Phenylgruppe,
oder in welchen
$R_8$ und $R_9$ zusammen mit dem Stickstoffatom einen 5-, 6- oder 7-gliedrigen heterocyclischen Rest bilden, der noch als weiteres Heteroatom ein Stickstoff-, Sauerstoff- oder Schwefelatom enthalten kann, wie beispielsweise der Piperidin-, Piperazin-, Morpholin-, Pyridin- oder Pyrimidinring, oder

$R_8$ und $R_9$ oder $R_8$, $R_9$ und $R_{10}$ zusammen mit dem positiv geladenen Stickstoffatom einen 5-, 6- oder 7-gliedrigen heterocyclischen Rest bilden, der noch als weiteres Heteroatom ein Stickstoff-, Sauerstoff- oder Schwefelatom enthalten kann, wie beispielsweise den Piperidinium-, Morpholinium-, Piperazinium-, 4-N-Methyl-piperazinium- oder Pyridiniumrest, wobei $R_{10}$ entweder Teil des heterocyclischen Restes oder ein Wasserstoffatom oder die genannte Alkylgruppe sein kann;

der Benzolkern c kann durch 1 oder 2, vorzugsweise einen, Substituenten aus der Gruppe Halogen, wie Chlor und Brom, Nitro, Cyan, Sulfamoyl, Alkyl von 1 bis 4 C-Atomen, Alkoxy von 1 bis 4 C-Atomen und Carbalkoxy mit 1 bis 4 C-Atomen im Alkylrest substituiert sein;

der Benzolkern d kann durch 1 oder 2, vorzugsweise einen, Substituenten aus der Gruppe Halogen, wie Chlor, Nitro, Alkyl von 1 bis 4 C-Atomen, Alkoxy von 1 bis 4 C-Atomen und Carbalkoxy mit 1 bis 4 C-Atomen im Alkylrest substituiert sein;

n ist die Zahl 1 oder 2; und

$X^{(-)}$ ist das Äquivalent eines farblosen Anions entsprechend der weiter oben genannten Bedeutung.

Die Formelreste $R_6$, $R_7$, $R_8$, $R_9$, $R_{10}$ und Alk, ebenso die Substituenten von c und d können zueinander gleiche oder voneinander verschiedene Bedeutungen haben. Bevorzugt hat $R_{10}$ die gleiche Bedeutung wie $R_7$.

Die oben erwähnten Alkylgruppen sind vorzugsweise Methyl- und Äthylgruppen, die Alkoxygruppen vorzugsweise Methoxy- und Äthoxygruppen; Carbalkoxygruppen sind vorzugsweise Carbomethoxy- und Carbäthoxygruppen, Alkanoyloxygruppen vorzugsweise die Acetyloxygruppe.

Schließlich sollen an dieser Stelle noch solche bis-quartäre Farbstoffe erwähnt werden, welche neben einer Azamethin- bzw. Diazamethin-Funktion in ihrem Molekül auch eine Azogruppierung aufweisen, welche für die Durchführung des beanspruchten Verfahrens gleichfalls als brauchbar befunden worden sind.

Als weitere für das beanspruchte Verfahren in Betracht zu ziehende Farbstoffe sind insbesondere solche aus der Klasse der Naphthalactam-Verbindungen entsprechend den allgemeinen Formeln (10) und (11)

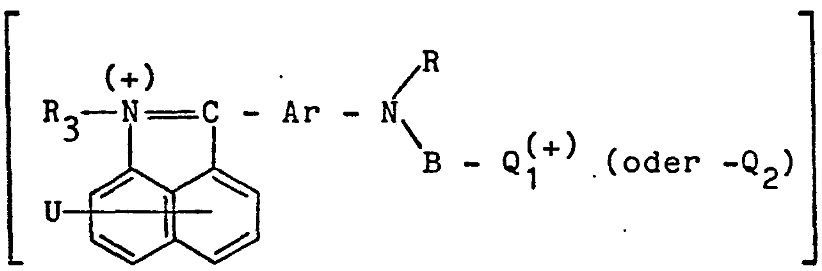 $2\ X^{(-)}$ oder $X^{(-)}$ (10)

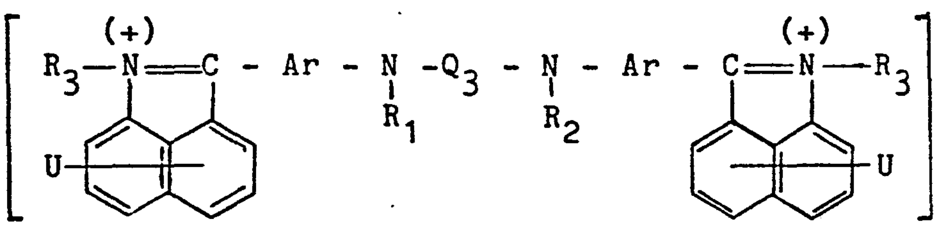 $2\ X^{(-)}$ (11)

hervorzuheben, worin Ar, B, $Q_1^{(+)}$, $Q_2$, $Q_3$, R, $R_1$, $R_2$, $R_3$, U und $X^{(-)}$ mit den weiter oben genannten Bedeutungen für diese Substituenten übereinstimmen.

Schließlich sind von den erfindungsgemäß verwendbaren Farbstoffen solche zu nennen, die auf Verbindungen der allgemeinen Formeln (12) und (13)

$$\left[(Q_2\text{- oder) } Q_1^{(+)}\text{-B-}Y_1\text{-B-}Q_1^{(+)} \text{ (oder -}Q_2)\right] m\ X^{(-)} \quad (12)$$

und

$$\left[\begin{array}{c} (Q_2\text{- oder) } Q_1^{(+)}\text{-B-}\underset{\substack{| \\ B \\ | \\ Q_1^{(+)} \text{ (oder } -Q_2)}}{Y_1}\text{-B-}Q_1^{(+)} \text{ (oder } -Q_2) \end{array}\right] m\, X^{(-)} \quad (13)$$

zurückgehen, in denen $Y_1$ den Rest eines Farbstoffchromophors darstellt, wie beispielsweise eines gegebenenfalls durch Chlor oder Phenyl substituierten Kupferphthalocyanins, eines Anthrachinon-Abkömmlings, eines Nitrofarbstoffes oder eines Farbstoffes auf Basis einer Triphenylmethanverbindung; die anderen Substituenten B, $Q_1^{(+)}$, $Q_2$ und $X^{(-)}$ die weiter oben genannten Bedeutungen besitzen und <u>m</u> für 0, 1, 2 oder 3 steht.

Beim Gegenstand der vorliegenden Erfindung handelt es sich um ein Verfahren zum Färben von Fasergut, wie Faserbänder oder Fäden, aus sauer-modifizierten Acrylnitrilpolymerisaten im Gelzustand, die nach einem üblichen Naßspinnverfahren hergestellt worden sind. Aufgrund der Tatsache, daß die Färbung der versponnenen Polymerisate des Acrylnitrils erfindungsgemäß aus lösungsmittelhaltigen Flotten erfolgt, werden Waschprozesse, bei denen man die Fäden von dem zur Herstellung der Spinnlösung verwendeten Lösungsmittel befreit, überflüssig, d. h. die Färbeoperation läßt sich ohne Veränderung der für das Verspinnen und Fertigstellen ungefärbter Fäden benötigten und praxisüblichen maschinellen Ausrüstung durchführen. Im Rahmen des beanspruchten Verfahrens, unter Einsatz der in den vorstehenden Erläuterungen als brauchbar bezeichneten basischen Farbstoffe, eignen sich Färbebäder, welche außer Wasser zwischen 5 und 70 Gew.-%, vorzugsweise zwischen 5 und 50 Gew.-%, vor allem aber zwischen 5 und 30 Gew.-% eines organischen

Lösemittels oder eines Gemisches aus mehreren organischen Lösemitteln, in erster Linie des zum Verspinnen des Polymerisats verwendeten organischen Lösemittels enthalten. In diesem Falle werden die unverstreckten, teilverstreckten oder verstreckten Fasern oder Fäden - deren Hydratationszustand zwischen 5 und 150 % vom Gewicht des Polymers liegt, vorzugsweise zwischen 30 und 120 % - ohne getrocknet zu sein bei Temperaturen zwischen $10^o$ und $100^oC$, vorzugsweise zwischen $20^o$ und $90^oC$, bei einem pH-Wert zwischen 2 und 7, vorzugsweise zwischen 4 und 5,5, also im schwach sauren Bereich mit den in dem lösemittelhaltigen Färbemedium gelösten Farbstoffen behandelt. Die Färbezeit beträgt zwischen 1 Sekunde und 10 Minuten; im allgemeinen wird zwischen 1 und 60 Sekunden, vorzugsweise zwischen 3 und 20 Sekunden gefärbt. Die angeführte Färbedauer entspricht den Verweilzeiten der Fasern in der Färbeflotte, durch die das Spinngut nach dem Austreten aus der Düse und dem dann erfolgenden Koagulieren läuft. Hierbei kann der Kontakt zwischen dem Acrylnitrilpolymerisat und der Färbeflotte nach allen praxisüblichen Verfahrensweisen, beispielsweise in einem Tauchtrog wie einem Foulard stattfinden. Damit eine optimale Ausnutzung der Färbeflotte möglich ist, führt man vorteilhafterweise die Färbeflotte im Gegenstrom oder im Querstrom zur Fortbewegungsrichtung der Fasern.

Nach der vorliegenden Erfindung verbindet sich im Verlauf der Färbung je ein Äquivalent der sauren Gruppen in der Fasersubstanz mit einer entsprechenden Menge von sich gegenüber dieser Gruppe basisch verhaltenden Gruppen des Farbstoffes unter Ausbildung einer salzartigen Bindung.

Das Verstrecken der Fasern wird verfahrensgemäß vor, bei dem Färbevorgang selbst oder unmittelbar danach vorgenommen. Außerdem kann man nach erfolgter Färbung die Fasern

zusätzlich mit anionischen oder kationischen Weichmachern avivieren. Auch ist es möglich, eine Behandlung mit Dampf oder Heißluft anzuschließen.

Für die Durchführung des beanspruchten Verfahrens werden außer pH-regulierenden Verbindungen weitere Chemikalien im allgemeinen nicht benötigt, können aber für besondere Zwecke mitverwendet werden.

Da Elektrolyte bei vielen praxisüblichen Acrylnitril-Gel-Färbungen stören, ist es vorteilhaft, wenn die erfindungsgemäß verwendeten Farbstoffe elektrolytfrei zur Anwendung kommen, d. h., daß sie besonders vorteilhaft ohne größere Mengen Stellmittel bzw. in Form von Flüssigeinstellungen eingesetzt werden.

Die Konzentration des Farbstoffes im Färbebad hängt sowohl vom verwendeten Farbstoff als auch von der Nuance und Tiefe der gewünschten Färbung ab und kann von einer sehr niedrigen Konzentration bis zu einer gesättigten Farbstofflösung reichen.

Die Färbeoperation selbst kann verfahrensgemäß kontinuierlich oder diskontinuierlich bewerkstelligt werden. Während des Färbens wird bei kontinuierlich durchlaufendem Fasermaterial die Konzentration des Färbebades ständig auf dem gewünschten Wert gehalten, indem man auf geeignete Weise eine Lösung des Farbstoffes in einer derartigen Konzentration zugibt, daß der durch die Faserbänder aufgenommene Farbstoff fortlaufend ersetzt wird. Die so gefärbten Faserbänder bzw. Fäden werden anschließend unter praxisüblichen Bedingungen mit Dampf oder Heißluft fixiert, verstreckt, aviviert und gegebenenfalls unter Zulassung von Schrumpf getrocknet, gekräuselt und in Kartons abgelegt. Die erzielten Echtheiten, wie Licht-, Wasser-, Schweiß-, Trok-

ken- und Naßreibechtheiten und Überfärbeechtheiten sind in allen Fällen einwandfrei.

Neben den Polymeren des Acrylnitrils kommen für den Einsatz nach dem beanspruchten Verfahren als zu verspinnende Substrate Mischpolymerisate des Acrylnitrils mit anderen Vinylverbindungen, wie z. B. Vinylidencyanid, Vinylchlorid, Vinylfluorid, Vinylacetat, Vinylpropionat, Vinylpyridin, Vinylimidazol, Vinylpyrrolidon, Vinyläthanol, Acryl- oder Methacrylsäure, Acryl- oder Methacrylsäureester, Acryl- oder Methacrylsäureamide in Betracht, wobei diese Mischpolymerisate mindestens 50 Gew.-%, vorzugsweise mindestens 85 Gew.-% Acrylnitril-Einheiten aufweisen. Die verwendeten Homopolymerisate von Acrylnitril oder dessen Mischpolymerisate sind sauer modifiziert; sie enthalten mindestens eine saure Funktion, wie z. B. Sulfo- oder Sulfatogruppen, welche mittels eines Katalysators jeweils in das Ende der Polymerisatketten eingeführt, oder als saure Gruppen enthaltende Comonomere, wie z. B. Acrylsäure, Itaconsäure, Vinylsulfonsäure, Styrolsulfonsäure, Allylsulfonsäure, Methallylsulfonsäure, Vinyloxyarensulfonsäure, Allyloxyarensulfonsäure, Methallyloxyarensulfonsäure, Acryloxyalkoxyarensulfonsäure sowie deren Alkalisalze, einpolymerisiert wurden.

Es sind erfindungsgemäß also alle Acrylnitrilpolymerisate geeignet, welche zur Bindung der verwendeten basischen Farbstoffe befähigende saure Gruppen enthalten. Solche sauren Gruppen sind in dem Spinngut in Mengen zwischen 10 und 150 Milliäquivalent pro kg Polymerisat, vorzugsweise zwischen 20 und 80 Milliäquivalent pro kg Polymerisat vorhanden.

Die beschriebenen Acrylnitrilpolymerisate können aus allen praxisüblichen Lösungsmitteln auf organischer Basis versponnen werden, worauf sich die Färbung mit den erfindungsgemäßen Farbstoffen, vorzugsweise aus demselben organischen Medium anschließt. Für den Spinnprozeß sowie die darauf folgende Färbeoperation kommen als geeignete Lösungsmittel Dimethylformamid, Dimethylacetamid, Äthylencarbonat, ß-Butyrolacton, Tetramethylensulfon, Dimethylsulfoxyd sowie andere polare, aprotische Verbindungen in Frage.

Bei der im vorliegenden Fall durchgeführten Naßspinnverfahrensweise wird das gelöste Polymerisat in ein Koagulationsbad, welches neben dem zum Lösen des Polymers verwendeten Lösungsmittel noch etwa 30 bis 70 Gew.-%, vorzugsweise 40 bis 60 Gew.-% Wasser enthält, eingesponnen; nach dem Koagulationsbad können die so ersponnenen Fäden ein Streckbad, welches noch etwa 30 bis 85 Gew.-%, vorzugsweise 40 bis 85 Gew.-% Wasser enthält, durchlaufen; anschließend folgt z. B. ein Waschbad, das noch zu über 70 Gew.-%, vorzugsweise zu über 80 Gew.-%, oder ganz aus Wasser besteht. Wie bereits weiter oben erwähnt, können die Maßnahmen zur Verstreckung beim beanspruchten Verfahren auch während der Färbeoperation oder im Anschluß daran erfolgen.

Das Alter des Spinngutes spielt für das Verfahren der vorliegenden Erfindung keine große Rolle. Sowohl frisch gesponnenes Faserkabel als auch Spinngut, welches 3 Monate alt war und in verschlossenen Kannen aufbewahrt wurde, zeigte nach dem Färbeprozeß die gleiche tiefe Anfärbung und vollkommene Durchfärbung der Fasern.

Die nachstehenden Beispiele dienen zur Erläuterung der Erfindung. Die darin angegebenen Teile und Prozentangaben sind Gewichtsteile und Gewichtsprozente, sofern nichts anderes vermerkt ist. Volumenteile verhalten sich zu Gewichtsteilen wie Liter zu Kilogramm.

<u>Beispiel 1</u>:

Ein Acrylnitril-Mischpolymerisat aus 94 % Acrylnitril, 5 % Acrylsäuremethylester und 1 % Na-Methallylsulfonat wird in Form einer 28%igen Spinnlösung in Dimethylformamid nach Standardbedingungen bei 80°C unter Einsatz einer 100-Loch-Spinndüse mit einem Lochdurchmesser von 80 µm naß versponnen, wobei man ein Koagulationsbad von 50°C verwendet, welches aus 50 % Dimethylformamid und 50 % Wasser besteht.

Das erhaltene Fadenmaterial wird sodann ohne vorherige Trocknung in einer Menge von 10 g (Trockengewicht), entsprechend 20 g Feuchtgewicht, für 60 sec. unter guter Flottenbewegung in eine mittels Essigsäure auf pH 4,5 gestellte Lösung von 0,01 g eines bis-quartären Farbstoffes der Formel

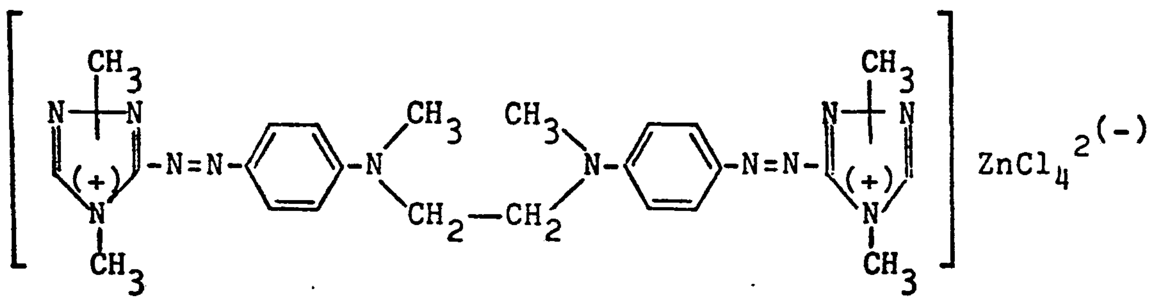

in 250 ml einer Lösung aus 20 % Dimethylformamid und 80 % Wasser von Raumtemperatur gebracht. Nach Ablauf der angegebenen Verweilzeit des Spinngutes in der Färbeflotte beobachtet man eine praktisch vollständige Baderschöpfung. Die so behandelten Fäden werden anschließend mit Wasser gespült, wie üblich verstreckt, relaxiert und getrocknet.

Man erhält eine blaustichig rote Färbung mit ausgezeichneten Echtheiten, hauptsächlich besonders guten Naßechtheiten und sehr guten Lichtechtheiten.

Beispiel 2:

Verwendet man bei der im Beispiel 1 aufgeführten Färbung eine Lösung von 0,05 g des dort genannten Farbstoffes in 100 ml einer Lösung aus 40 % Dimethylformamid und 60 % Wasser und hält eine Färbedauer von 10 sec. ein, so erzielt man ebenfalls eine farbstarke Färbung des Fadenmaterials mit ausgezeichneten Echtheiten.

Verkürzt man nunmehr die Färbedauer noch weiter bis auf 3 sec., so erhält man wohl eine etwas hellere Färbung aber mit gleichfalls ausgezeichneten Echtheiten und mit völliger Durchfärbung des Fadenmaterials über den gesamten Faserquerschnitt.

Beispiel 3:

Führt man das Fadenmaterial des Beispiels 1 kontinuierlich (als Endlosfäden) durch das gemäß Beispiel 2 verwendete Färbebad, wobei kein spezielles Koagulationsbad vorgeschaltet (also Koagulation im Färbebad) und eine Verweilzeit der Fäden in der Färbeflotte von 3 sec. eingestellt wird und wobei ein Luftgang des laufenden Fadens von 2 min. bei Raumtemperatur nachgeschaltet, die so gefärbte Ware gespült, verstreckt, relaxiert, aviviert und anschließend getrocknet wird, so erhält man ein gleich gutes Färberesultat wie in Beispiel 2. Die Spül- und Avivagebäder werden hierbei durch den eingesetzten Farbstoff nicht merklich angeblutet.

Bei Einhaltung einer Verweilzeit von 2 sec. und sonst gleichen Bedingungen wird eine etwas hellere, von 10 sec. eine dunklere Färbung erzielt.

Beispiel 4:

Schließt man bei dem im Beispiel 1 beschriebenen Färbeverfahren nach dem Spülgang des gefärbten Fadenmaterials eine Behandlung desselben während 30 sec. in einer Lösung von 0,5 g eines Weichmachers der Formel

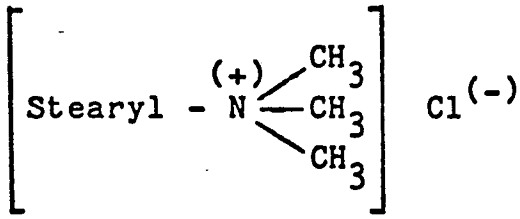

in 100 ml Wasser von Raumtemperatur an, so führt diese Avivage zu keinem Ausbluten des Farbstoffes in das angewendete Avivagebad.

Beispiel 5:

Verwendet man das Polymer des Beispiels 1, verspinnt dieses jedoch hier unter Einsatz von Dimethylacetamid als Lösungsmittel in einem praxisüblichem Naßspinnverfahren, so läßt sich mit dem in dieser Weise gewonnenen Spinngut die im Beispiel 1 beschriebene Färbung mit dem gleich guten Resultat durchführen. Die Farbstoff-Fixierung verläuft genauso rasch und vollständig.

Beispiel 6:

Verwendet man das Polymer des Beispiels 1, verspinnt dieses jedoch hier unter Einsatz von Äthylencarbonat als Lösungsmittel in einem praxisüblichen Naßspinnverfahren, so läßt sich mit dem in dieser Weise gewonnenen Spinngut die im Beispiel 1 beschriebene Färbung mit dem gleich guten Resultat durchführen. Die Farbstoff-Fixierung verläuft rasch und vollständig.

Beispiel 7:

Verwendet man das Polymer des Beispiels 1, verspinnt dieses jedoch hier unter Einsatz von Dimethylsulfoxyd als Lösungsmittel in einem praxisüblichen Naßspinnverfahren, so läßt sich mit dem in dieser Weise gewonnenen Spinngut die im Beispiel 1 beschriebene Färbung mit gleich gutem Resultat durchführen. Die Farbstoff-Fixierung verläuft rasch und vollständig.

Beispiele 8 bis 14:

Ersetzt man nunmehr das im Beispiel 1 verwendete Polymer durch andere Polymere mit der folgenden Zusammensetzung, so erhält man mit dem in dieser Weise gewonnenen Spinngut entsprechend der Färbevorschrift des Beispiels 1 ebenfalls eine sehr rasche und feste Farbstoff-Fixierung:

| Beispiel | Polymer aus |
|---|---|
| 8 | 94 % Acrylnitril |
| | 4 % Acrylsäuremethylester |
| | 2 % Na-Methallylsulfonat |
| 9 | 95 % Acrylnitril |
| | 4,5 % Acrylsäuremethylester |
| | 0,5 % Acrylsäure |
| 10 | 85 % Acrylnitril |
| | 13 % Vinylchlorid |
| | 2 % Na-Allylsulfonat |
| 11 | 85 % Acrylnitril |
| | 14,5 % Vinylacetat |
| | 0,5 % Na-Vinylsulfonat |
| 12 | 59 % Acrylnitril |
| | 40 % Vinylidenchlorid |
| | 1 % Na-Methallylsulfonat |
| 13 | 94 % Acrylnitril |
| | 5 % Acrylsäuremethylester |
| | 1 % Styrol-4-sulfonsäure-Na |
| 14 | 94 % Acrylnitril |
| | 4 % Vinylacetat |
| | 1 % Na-Methallylsulfonat |
| | 1 % Itaconsäure-Na |

Beispiel 15:

Verwendet man anstelle der gemäß Beispiel 1 erzeugten Fäden hier solche Fäden, denen beim Spinnprozeß 0,2 Teile eines handelsüblichen Titandioxyd-Mattierungsmittels (bezogen auf das Polymer) zugesetzt worden sind, so erhält man beim Färben des Spinngutes entsprechend der Arbeitsweise des Beispiels 1 ebenfalls eine gute Farbstoff-Fixierung und sehr gute Echtheiten.

Beispiele 16 und 17:

Arbeitet man beim Färben des Spinngutes anstelle der Angaben des Beispiels 1 bei einer Färbetemperatur von 60°C bzw. 90°C, aber sonst unter identischen Bedingungen, so erhält man eine gleich tiefe Anfärbung der Fäden bei gleich guten Echtheitseigenschaften.

Beispiel 18:

Verwendet man anstelle des im Beispiel 1 eingesetzten Fadenmaterials ein Fadenmaterial von identischer polymerer Zusammensetzung, welches bei gleichem Trockengewicht (= 10g), jedoch ein Feuchtgewicht von 25 g aufweist (d. h. ein hoch hydratisiertes Material), so erhält man ebenfalls eine sehr gute Farbstoff-Fixierung auf dem Spinngut, wenn man zum Färben nach den Angaben des Beispiels 1 arbeitet.

Beispiel 19:

Verwendet man zum Färben anstelle des im Beispiel 1 eingesetzten Farbstoffes hier einen konventionellen mono-quartären Farbstoff der Formel

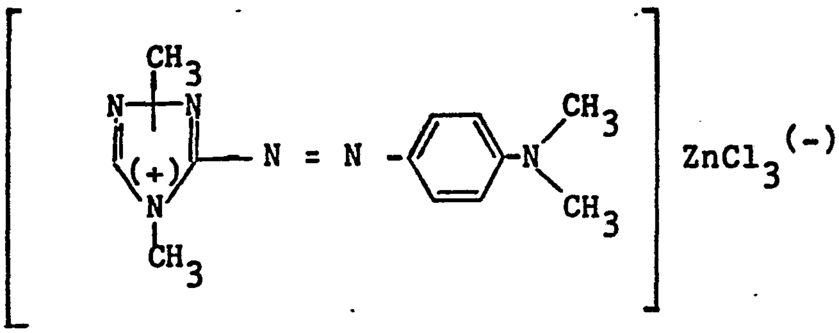

so erhält man auf dem Spinngut entsprechend der Arbeitsweise des Beispiels 1 nur eine sehr unvollständige Farbstoff-Fixierung, d. h., es bleibt ein sehr großer Teil des Farbstoffes in der Färbeflotte zurück. Durch eine Verlängerung der Verweilzeit läßt sich in diesem Fall keine Erhöhung der Farbstoff-Fixierung erzielen.

Im Gegensatz hierzu ergibt die Färbung des gleichen Fadenmaterials mit dem bis-quartären Farbstoff des Beispiels 1 eine sehr weitgehende Erschöpfung der Färbeflotte bereits nach Ablauf der normal üblichen Färbezeit.

Beispiele 20 und 21:

Setzt man zum Färben des Spinnguts mit dem bis-quartären Farbstoff von Beispiel 1 anstelle der dort verwendeten Farbstoffmenge von 0,01 g hier Mengen von 0,03 g bzw. 0,001 g des identischen Farbstoffes ein, so erhält man nach der Arbeitsweise gemäß Beispiel 1 bei der im vorliegenden Färbetest entsprechend erhöhten oder verringerten Farbtiefe eine gleichermaßen rasche und feste Farbstoff-Fixierung. Die Echtheiten der Färbungen sind ebenfalls sehr gut.

Beispiele 22 und 23:

Wird im Zuge der Arbeitsweise des Beispiels 1 das frisch gesponnene Fadenmaterial nach dem Koagulieren derart gewaschen, daß noch ein Restgehalt an dem als Spinn-Lösungsmittel verwendeten Dimethylformamid von 8 % bzw. 20 % in dem zum Färben eingesetzten Spinngut verbleibt, so ergibt sich bei der Färbeoperation nach der dortigen Vorschrift ebenfalls eine sehr hohe Farbstoff-Fixierung.

Beispiele 24 und 25:

Führt man die Färbung des Beispiels 1 anstelle bei pH 4,5 hier bei pH-Werten von 3 bzw. 6, aber sonst denselben Arbeitsbedingungen durch, so erhält man das gleiche Färbeergebnis wie im Beispiel 1.

Beispiel 26:

Arbeitet man bei der Naßverspinnung des Polymers gemäß den Angaben des Beispiels 1, verstreckt aber das gewonnene Fadenmaterial vor dem eigentlichen Färbeprozeß in praxisüblicher Weise im Verhältnis von 1 : 1,5, d. h. um 50 %, so ergibt sich beim Färben nach Vorschrift von Beispiel 1 ebenfalls eine sehr gute Farbstoff-Fixierung.

Beispiel 27:

Arbeitet man zum Färben gemäß den Angaben des Beispiels 2, jedoch unter Führung des Fadenmaterials in Gegenrichtung zum Strom der Färbeflotte, wobei ein rohrförmiges Färbebad verwendet wird, so erreicht man eine vollständige Erschöpfung des Färbebades, d. h., durch die sehr gute Farbstoff-Fixierung tritt nach Ablauf der Verweilzeit ein von Farbstoff weitgehend befreites Restfärbebad aus.

Beispiel 28:

Führt man die in Beispiel 3 beschriebene Färbung unter gleichzeitiger Verstreckung des Fadenmaterials im Verhältnis von 1 : 3 durch, so erhält man ein gleich gutes Färbeergebnis wie in Beispiel 3.

Beispiel 29:

Verwendet man bei der Arbeitsweise des Beispiels 1 zum Färben des Spinngutes hier eine Mischung von Farbstoffen in den unten angegebenen Mengen:

0,005 g Farbstoff der Formel

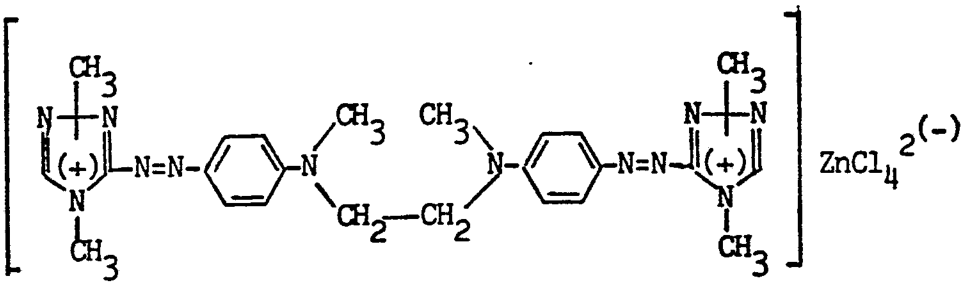

0,003 g Farbstoff der Formel

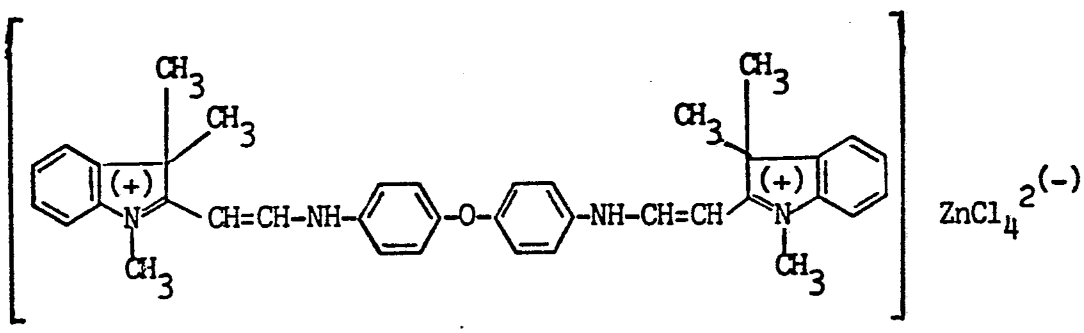

0,002 g Farbstoff der Formel

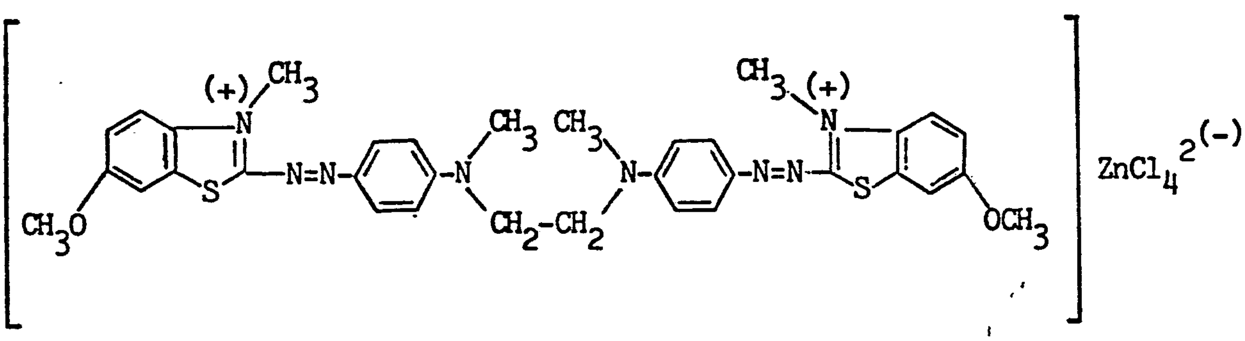

so erhält man eine farbtiefe braune Färbung mit sehr hohen Echtheiten, besonders mit sehr hoher Lichtechtheit, Waschechtheit und alkalischer Schweißechtheit.

Beispiel 30 und 31:

Wird bei der Arbeitsweise des Beispiels 1 nach der eigentlichen Färbung und Spülung des Fadenmaterials mit Wasser noch ein Dämpfprozeß desselben während 20 min. bei ca. 102°C bzw. 10 min. bei 115°C angeschlossen, so erhält man ebenfalls ein sehr gutes Färberesultat.

Tabellenbeispiele

Werden zum Färben des Spinnguts anstelle des im Beispiel 1 verwendeten Farbstoffes hier andere Farbstoffe der folgenden Formeln eingesetzt, so erhält man unter Einhaltung von sonst identischen Bedingungen ebenfalls eine sehr gute Farbstoff-Fixierung, d. h. eine gute Baderschöpfung und ein sehr hohes Echtheitsniveau:

| Beispiel | Formel | Nuance |
|---|---|---|
| 32 | 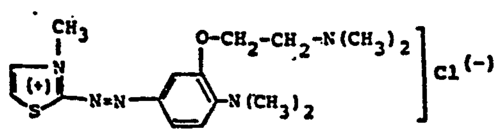 | rotstichig blau |
| 33 | 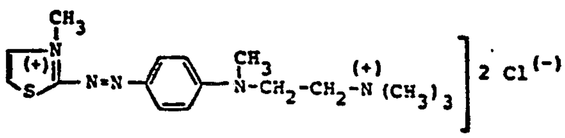 | blaustichig violett |

| Beispiel | Formel | Nuance |
| --- | --- | --- |
| 34 | 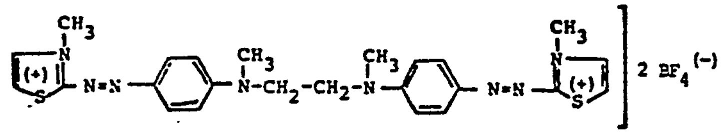 | blaustichig violett |
| 35 | 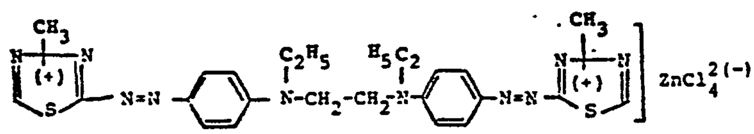 | violett |
| 36 | 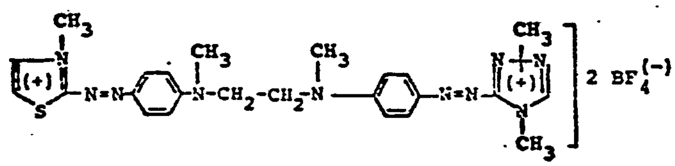 | rotstichig violett |
| 37 | 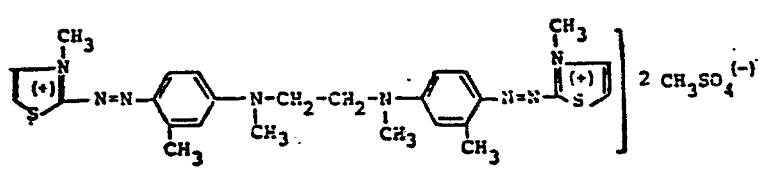 | violett |
| 38 | 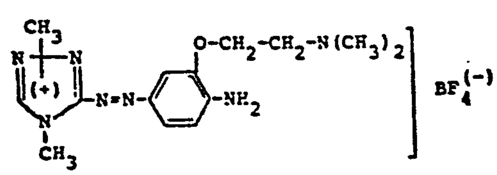 | blaustichig rot |

| Beispiel | Formel | Nuance |
|---|---|---|
| 39 | 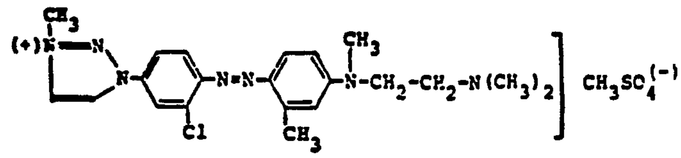 | gelbstichig rot |
| 40 | 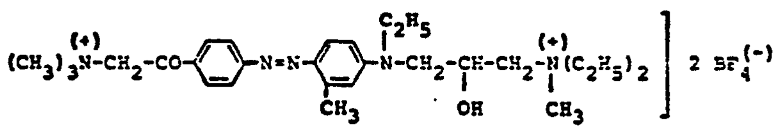 | rot |
| 41 | 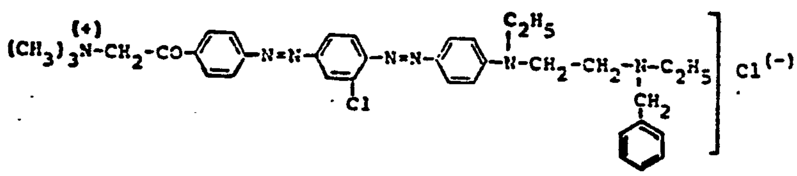 | orange |
| 42 | 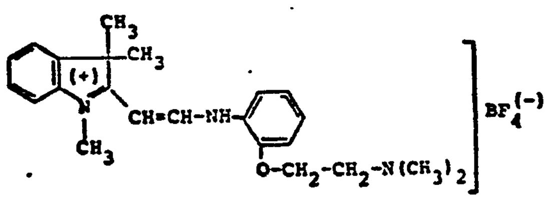 | gelb |
| 43 | 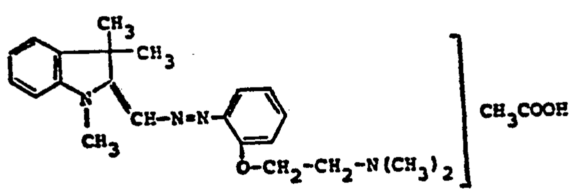 | rotstichig gelb |
| 44 | 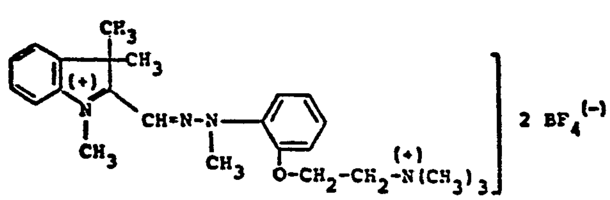 | rotstichig gelb |
| 45 | 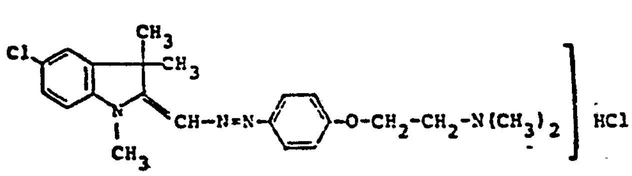 | rotstichig gelb |

| Beispiel | Formel | Nuance |
| --- | --- | --- |
| 46 | 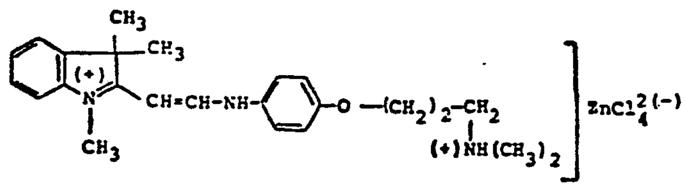 | gelb |
| 47 | 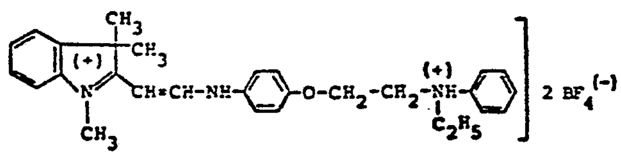 | gelb |
| 48 | 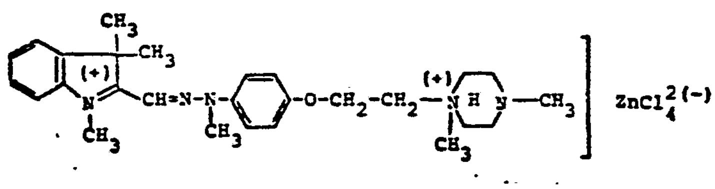 | rotstichig gelb |
| 49 | 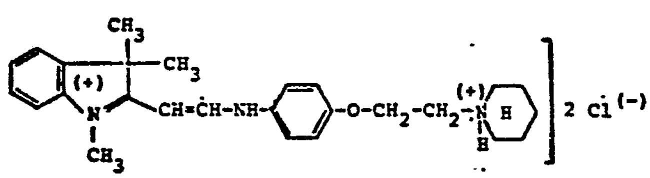 | gelb |
| 50 | 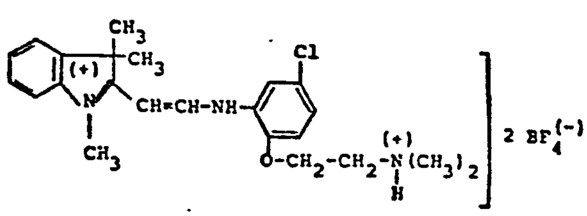 | gelb |

| Beispiel | Formel | Nuance |
|---|---|---|
| 51 | 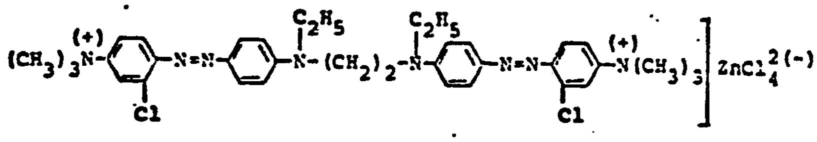 | orange |
| 52 | 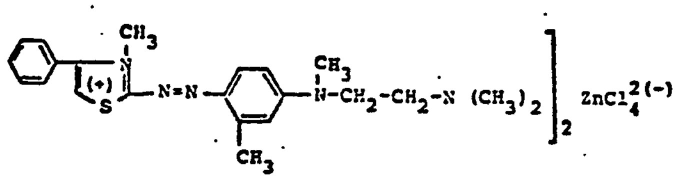 | rotstichig blau |
| 53 | 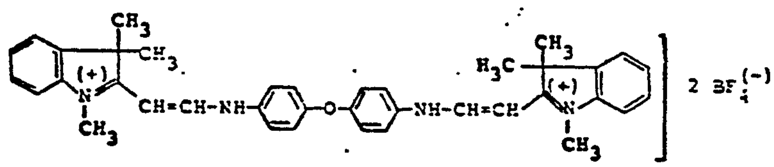 | gelb |
| 54 | 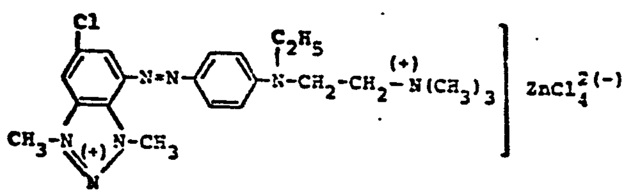 | bordo |
| 55 | 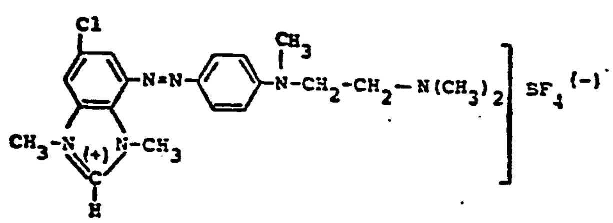 | rot |
| 56 | 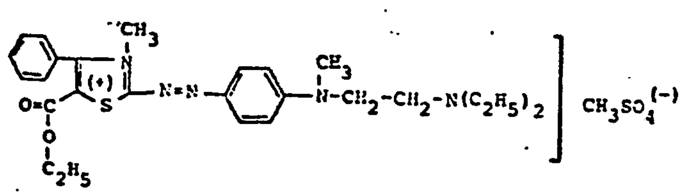 | blau |
| 57 | 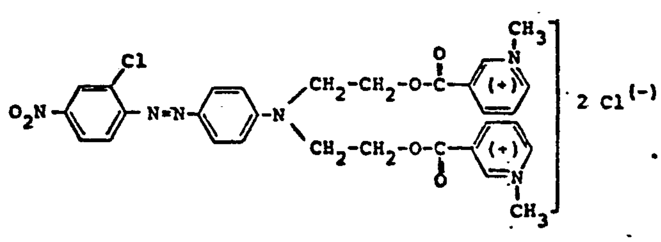 | rot |

| Beispiel | Formel | Nuance |
| --- | --- | --- |
| 58 | 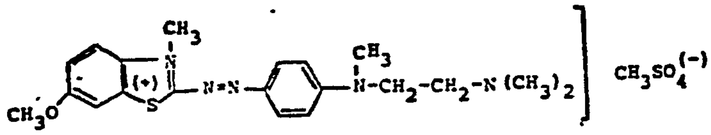 | blau |
| 59 | 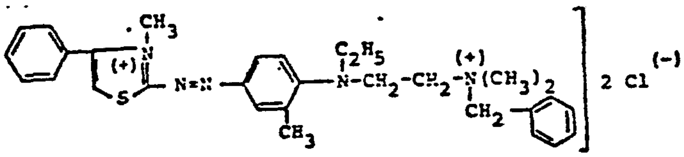 | violett |
| 60 | 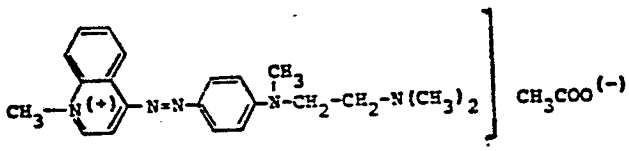 | blau |
| 61 | 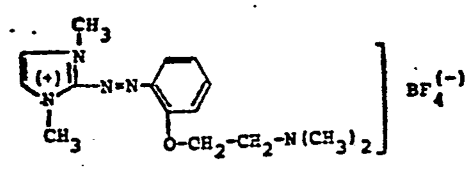 | rot |
| 62 | 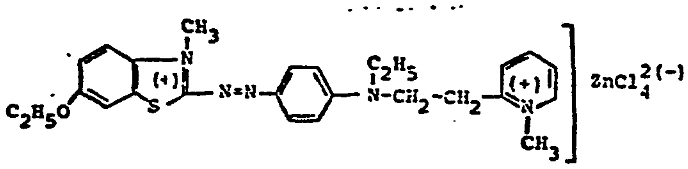 | blau |
| 63 | 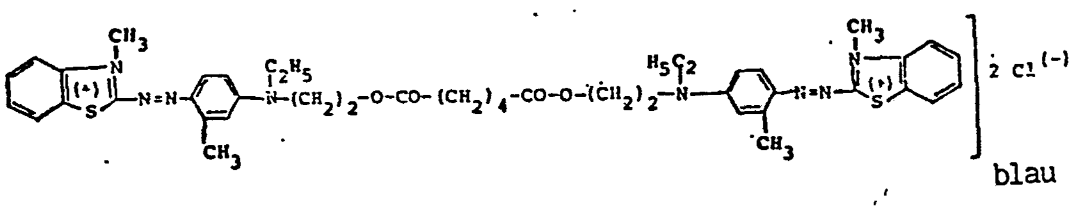 | blau |
| 64 | 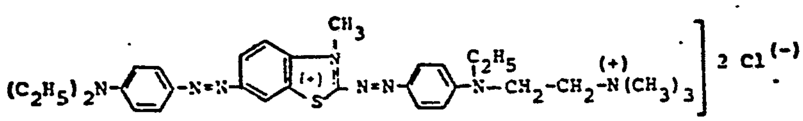 | blau |

| Beispiel | Formel | Nuance |
|---|---|---|
| 65 | 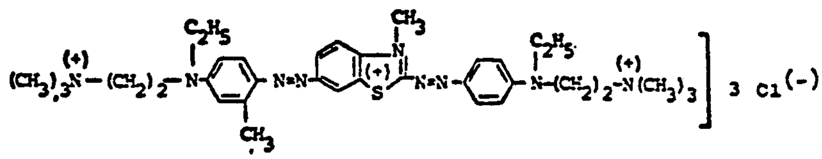 | blau |
| 66 | 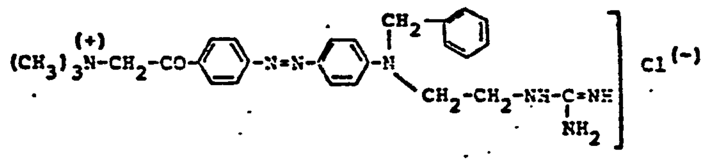 | orange |
| 67 | 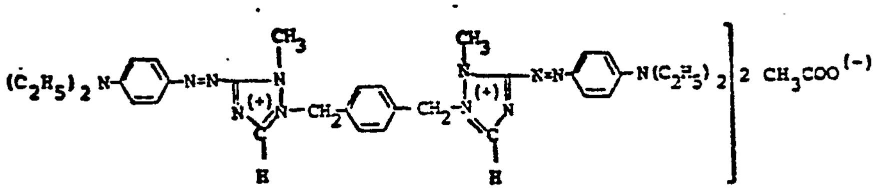 | blaustichig rot |
| 68 | 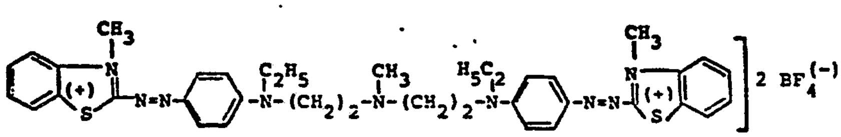 | violett |
| 69 | 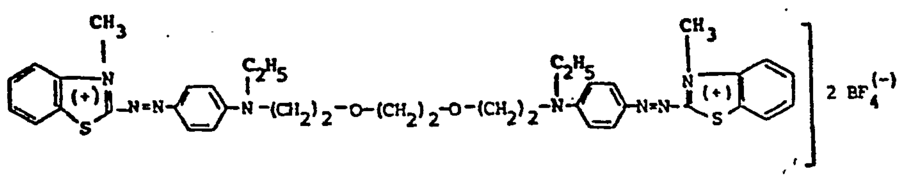 | blau |

| Beispiel | Formel | Nuance |
| --- | --- | --- |
| 70 | 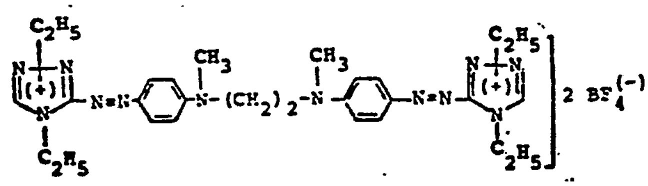 | bordo |
| 71 | 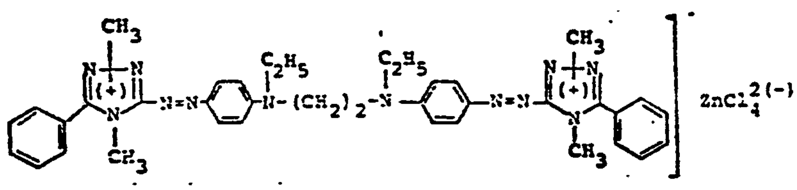 | rot |
| 72 | 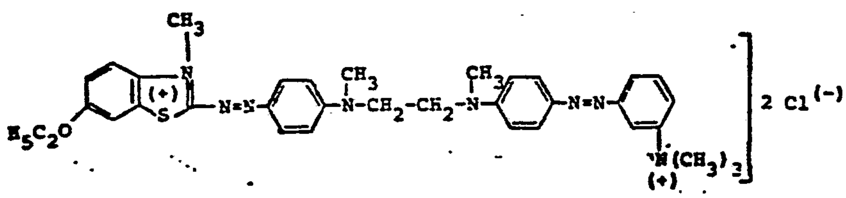 | grün |
| 73 | 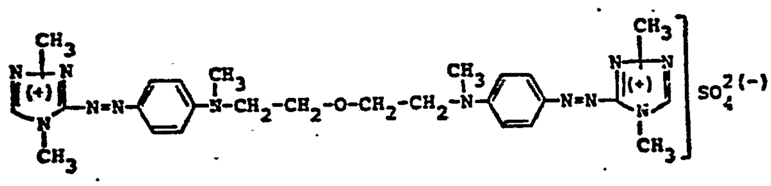 | rot |
| 74 | 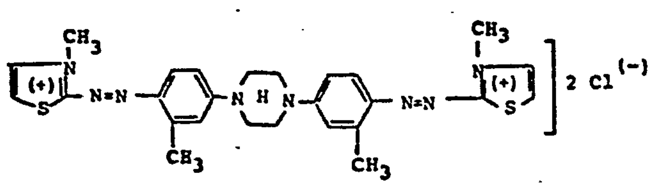 | violett |

| Beispiel | Formel | Nuance |
|---|---|---|
| 75 | 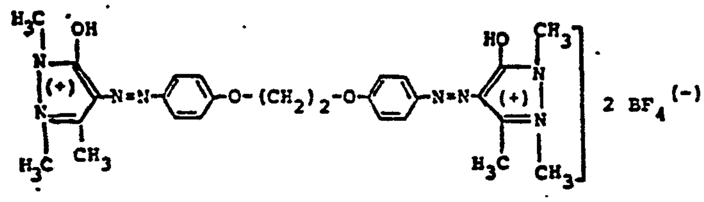 | gelb |
| 76 | 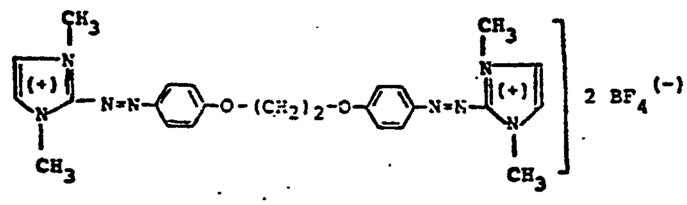 | gelb |
| 77 | 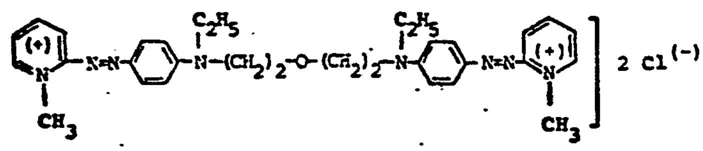 | rotstichig violett |
| 78 | 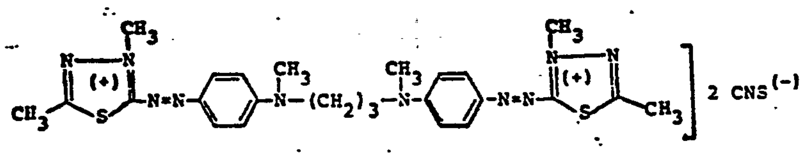 | gelbstichig rot |
| 79 | 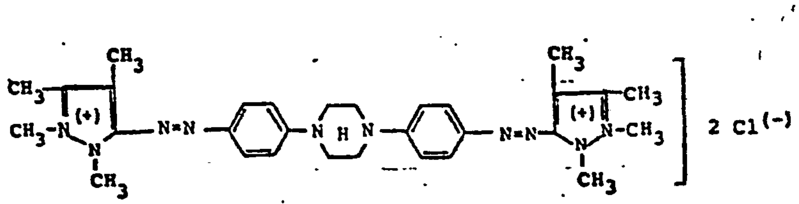 | rot |

| Beispiel | Formel | Nuance |
|---|---|---|
| 80 | 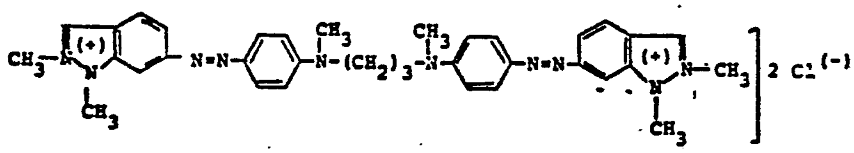 | rot |
| 81 | 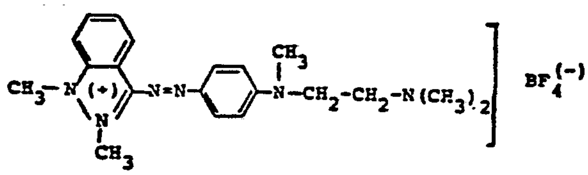 | rot |
| 82 | 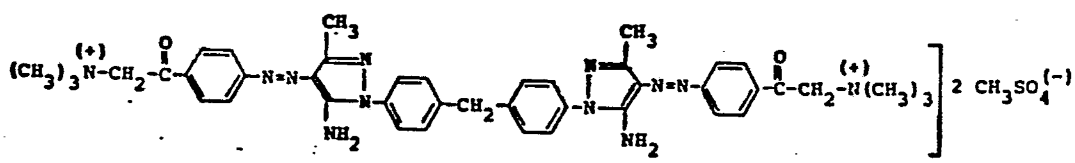 | rotstichig gelb |
| 83 | 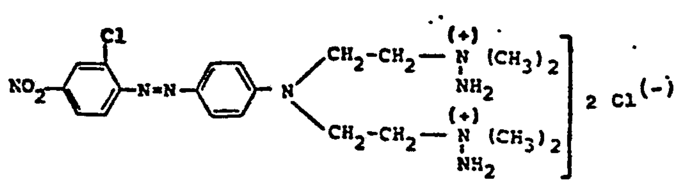 | gelbstichig rot |
| 84 | 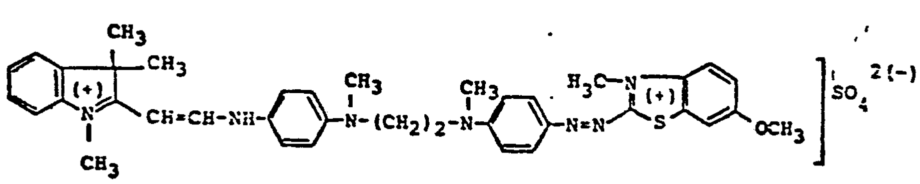 | grün |

| Beispiel | Formel | Nuance |
| --- | --- | --- |
| 85 | 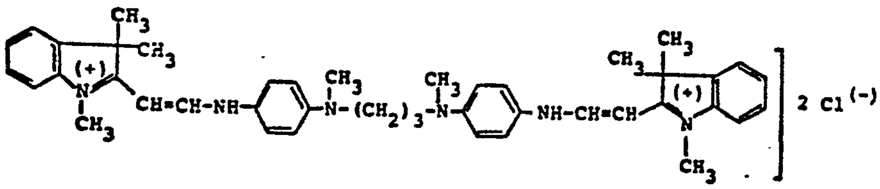 | gelb |
| 86 | 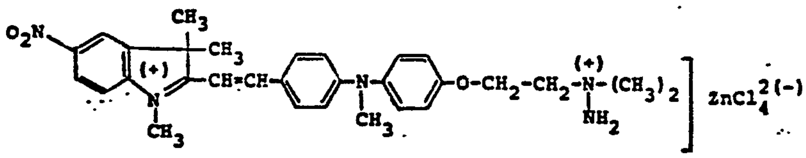 | blau |
| 87 | 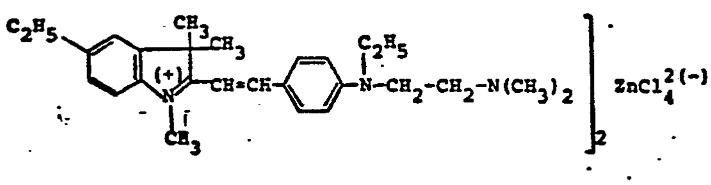 | rot |
| 88 | 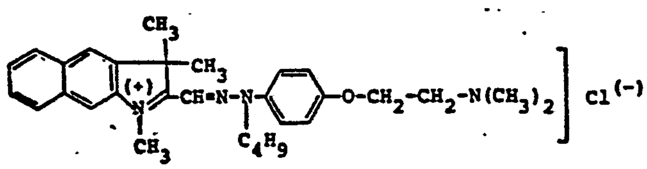 | orange |
| 89 | 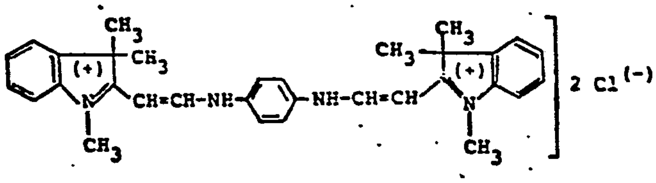 | rotstichig gelb |

| Beispiel | Formel | Nuance |
|---|---|---|
| 90 | 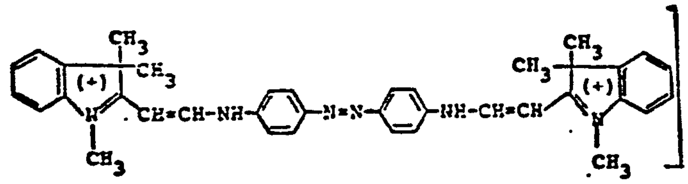 $2\ Cl^{(-)}$ | rot |
| 91 | 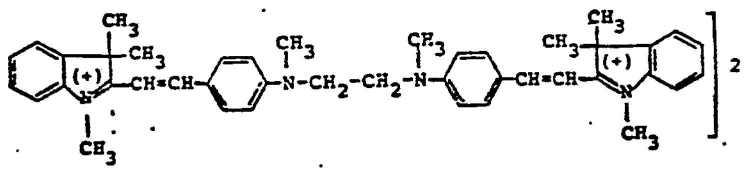 $2\ CH_3COO^{(-)}$ | rot |
| 92 | 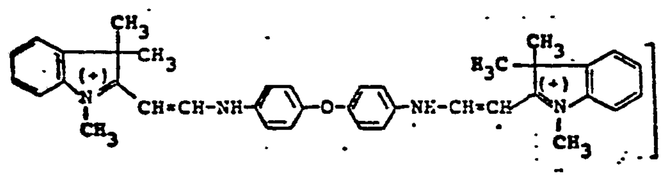 $2\ SCN^{(-)}$ | rotstichig gelb |
| 93 | 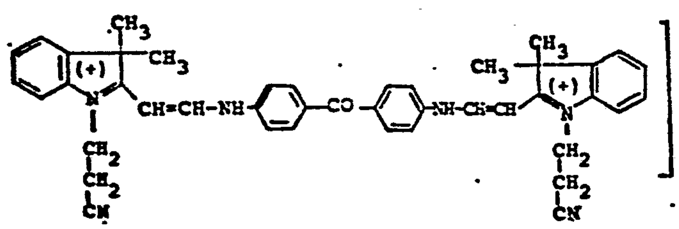 $2\ Cl^{(-)}$ | gelb |
| 94 | 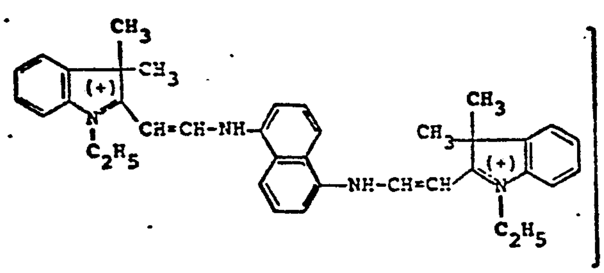 $2\ BF_4^{(-)}$ | rotstichig gelb |

| Beispiel | Formel | Nuance |
|---|---|---|
| 95 | 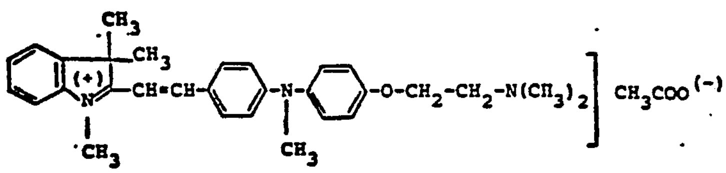 | violett |
| 96 | 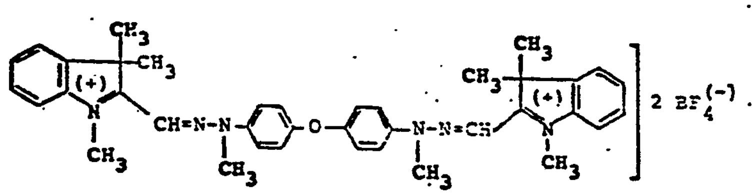 | orange |
| 97 | 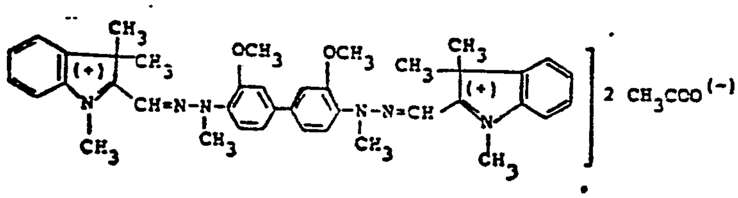 | rotstichig gelb |
| 98 | 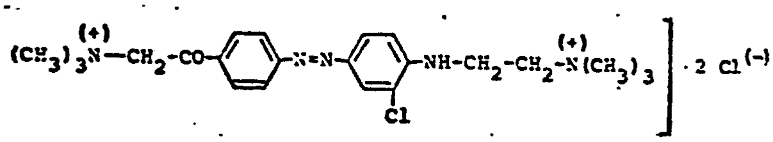 | rotstichig gelb |
| 99 | 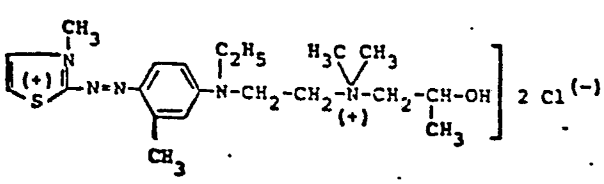 | violett |

| Beispiel | Formel | Nuance |
|---|---|---|
| 100 | 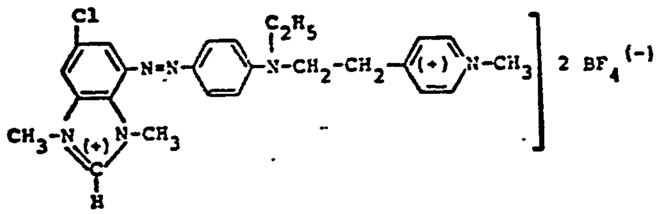 | rot |
| 101 | 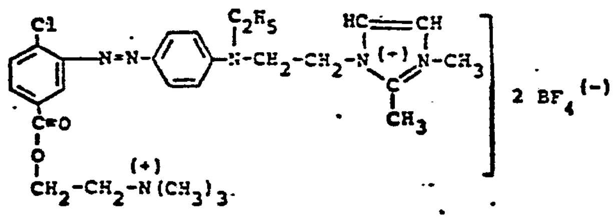 | orange |
| 102 | 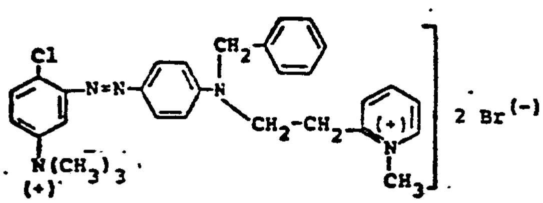 | orange |
| 103 | 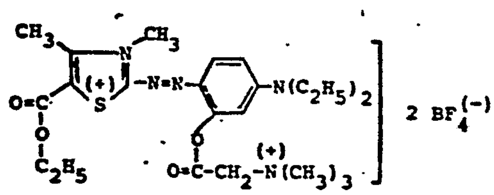 | rotstichig blau |
| 104 | 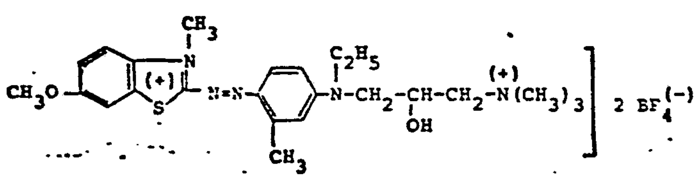 | blau |

| Beispiel | Formel | Nuance |
|---|---|---|
| 105 | 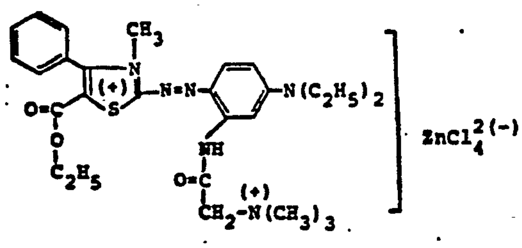 | violett |
| 106 | 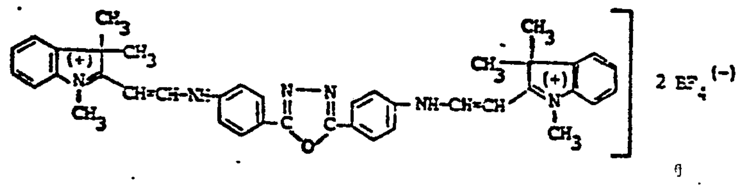 | gelb |
| 107 | 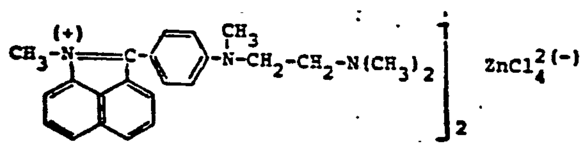 | blau |
| 108 | 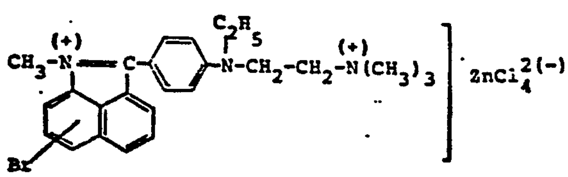 | blau |
| 109 | 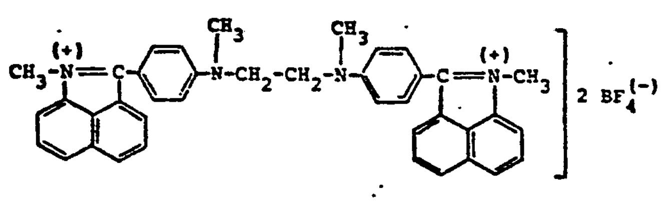 | blau |
| 110 | 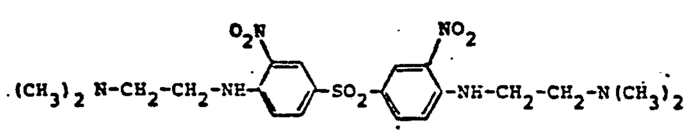 | gelb |

Patentansprüche:

1. Verfahren zum Färben im Zuge des Herstellungsprozesses von nach einem üblichen Naßspinnverfahren erzeugtem Fasergut aus sauer-modifizierten Polymeren oder Mischpolymeren des Acrylnitrils, im Gelzustand sowie gegebenenfalls vor der endgültigen Verstreckung, mit Lösungen von gegenüber den sauren Gruppen der Fasersubstanz sich basisch verhaltenden Farbstoffen, welche neben Wasser noch einen höheren Gehalt an einem organischen Lösemittel - speziell des zum Verspinnen des Polymers verwendeten Lösemittels - enthalten, dadurch gekennzeichnet, daß die eingesetzten Farbstoffe in ihrem Molekül mehr als eine solche sich gegenüber den sauren Gruppen der Fasersubstanz basisch verhaltende Gruppe aufweisen.

2. Verfahren nach Anspruch 1, dadurch gekennzeichnet, daß die sich basisch verhaltenden Gruppen im Farbstoffmolekül **mehr als eine quartäre Gruppe sind.**

3. Verfahren nach Anspruch 1, dadurch gekennzeichnet, daß die sich basisch verhaltenden Gruppen im Farbstoffmolekül eine quartäre Gruppe und zusätzlich eine oder mehrere aliphatisch gebundene, primäre, sekundäre oder tertiäre Amino-, Guanidino-, Amidino- oder Hydrazinogruppen sind.

4. Verfahren nach Anspruch 1, dadurch gekennzeichnet, daß die sich basisch verhaltenden Gruppen im Farbstoffmolekül mehr als eine aliphatisch gebundene, primäre, sekundäre oder tertiäre Amino-, Guanidino-, Amidino- oder Hydrazinogruppe sind.

5. Verfahren nach einem der Ansprüche 1 bis 3, dadurch gekennzeichnet, daß man als basischen Farbstoff einen Monoazo-Farbstoff der allgemeinen Formel (1)

$$\left[ D^{(+)} - N = N - K \right] X^{(-)}$$ oder 2 $X^{(-)}$, falls K eine quartäre Gruppe enthält, (1)

verwendet, in welcher

$D^{(+)}$ den Rest einer aromatischen carbo- oder heterocyclischen Diazokomponente bedeutet, die eine quartäre Gruppe besitzt, insbesondere eine Cyclammoniumgruppe als Bestandteil eines 5- oder 6-gliedrigen, aromatischen heterocyclischen Ringes, gegebenenfalls mit einem direkt daran gebundenen oder ankondensierten aromatischen carbocyclischen Rest, wie einen Benzol- oder Naphthalinkern, wobei diese Ringe in den heterocyclischen und/oder carbocyclischen Teilen substituiert sein können; oder eine an einen gegebenenfalls substituierten, aromatischen carbo- oder heterocyclischen Rest, wie einen Benzol-, Naphthalin- oder Benzthiazolring, direkt gebundene oder über ein Brückenglied gebundene (quartäre) Ammonium- oder Hydrazoniumgruppe;

K den Rest einer aromatischen carbo- oder heterocyclischen Kupplungskomponente, insbesondere aus der Benzol-, Naphthalin- oder Indolreihe, darstellt mit mindestens einer, an den Kern direkt oder über ein Brückenglied, aliphatisch gebundenen primären, sekundären oder tertiären Aminogruppe oder einer (quartären) Ammoniumgruppe, gegebenenfalls als Bestandteil eines 5- oder 6-gliedrigen, aromatischen heterocyclischen Ringes (ggf. Cyclammoniumrestes), eines Amidins, Guanidins, Hydrazins oder eines Thiuroniumrestes, wobei diese Ringe in den heterocyclischen und/oder carbocyclischen Teilen substituiert sein können;

und

$X^{(-)}$ das Äquivalent eines Anions einer starken

anorganischen oder organischen Säure oder eines Doppelsalzes ist.

6. Verfahren nach Anspruch 5, dadurch gekennzeichnet, daß man als basischen Farbstoff einen Monoazo-Farbstoff der allgemeinen Formel (2a)

$$\left[ D^{(+)}\text{-N=N-Ar-}\underset{\substack{|\\R}}{N}\text{-B-}Q_1^{(+)} \quad (\text{oder } -Q_2) \right] \; 2\ X^{(-)} \text{ oder } X^{(-)} \qquad (2a)$$

oder der allgemeinen Formel (2b)

$$\left[ D^{(+)}\text{-N=N-Ar-O-B-}Q_1^{(+)} \quad (\text{oder } -Q_2) \right] \; 2\ X^{(-)} \text{ oder } X^{(-)} \qquad (2b)$$

oder der allgemeinen Formel (2c)

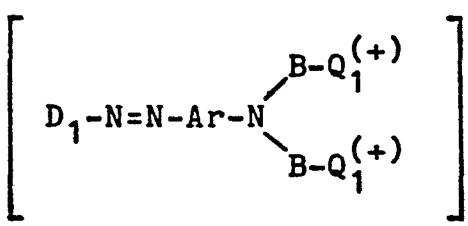

2 $X^{(-)}$ (2c)

verwendet, in welchen $D^{(+)}$ und $X^{(-)}$ die in Anspruch 5 angegebenen Bedeutungen besitzen;
$D_1$ für den Rest einer aromatischen carbo- oder heterocyclischen Diazokomponente, insbesondere aus der Benzol- oder Naphthalinreihe steht, der basische und/oder bevorzugt nicht-ionogene Substituenten enthalten kann;
Ar einen p-Phenylen- oder 1,4-Naphthylen-Rest darstellt, der bevorzugt durch 1 oder 2 nicht-ionogene Substituenten substituiert sein kann;

R ein Wasserstoffatom oder einen niederen, gegebenenfalls substituierter Alkylrest, einen Aralkyl- oder Cycloalkylrest bedeutet;
B ein zweiwertiges aliphatisches Brückenglied, insbesondere ein Alkylenrest von 1 - 6 C-Atomen, oder ein niederer Alkenylenrest ist;
$Q_1^{(+)}$ für eine (quartäre) Ammoniumgruppe, Hydrazoniumgruppe oder einen Cyclammoniumrest als Bestandteil eines 5- oder 6-gliedrigen, aromatischen heterocyclischen Ringes steht; und
$Q_2$ eine primäre, sekundäre oder tertiäre Aminogruppe, die Bestandteil eines 5- oder 6-gliedrigen, aromatischen heterocyclischen Ringes sein können, oder eine Amidino-, Guanidino- oder Hydrazinogruppe darstellt.

7. Verfahren nach einem der Ansprüche 1 bis 3, dadurch gekennzeichnet, daß man als basischen Farbstoff einen Disazo-Farbstoff der allgemeinen Formel (3a)

$$\left[ Q_1^{(+)}\text{-B-}\underset{\displaystyle R}{\underset{|}{N}}\text{-Ar-N=N-}A_1\text{-N=N-Ar-}\underset{\displaystyle R}{\underset{|}{N}}\text{-B-}Q_1^{(+)}\ (\text{oder } -Q_2) \right] \begin{matrix} 2\ X^{(-)} \\ \text{oder } X^{(-)} \end{matrix}$$

(3a)

oder der allgemeinen Formel (3b)

$$\left[ (Q_2\text{- oder})\ Q_1^{(+)}\text{-B-}\underset{\displaystyle R}{\underset{|}{N}}\text{-Ar-N=N-}A_2^{(+)}\text{-N=N-Ar-}\underset{\displaystyle R}{\underset{|}{N}}\text{-B-}Q_1^{(+)}(\text{oder } -Q_2) \right] \begin{matrix} 3\ X^{(-)} \\ \text{oder } 2\ X^{(-)} \\ \text{oder } X^{(-)} \end{matrix}$$

(3b)

verwendet, in welchen Ar, B, R, $Q_1^{(+)}$, $Q_2$ und $X^{(-)}$ die in Ansprüchen 5 und 6 genannten Bedeutungen besitzen, wobei die in den Formeln (3a) und (3b) jeweils zweifach auftretenden Formelreste jeweils gleich oder verschieden voneinander sein können;

$A_1$ für den Rest einer aromatischen carbo- oder heterocyclischen Tetrazokomponente steht;
$A_2^{(+)}$ den Rest einer aromatischen carbo- oder heterocyclischen Tetrazokomponente mit mindestens einer quartären Gruppierung, insbesondere als Bestandteil eines 5- oder 6-gliedrigen, aromatischen heterocyclischen Ringes, darstellt;
und wobei die Formelreste $Q_1^{(+)}$ sowie $Q_2$ - beide zusammen oder jeder einzeln für sich allein - auch direkt oder lediglich über das Brückenglied B an den jeweils zugehörigen Arylenrest Ar gebunden sein können, dann jedoch als Auswahlregel gilt, daß ein in Formel (3a) gegebenenfalls vorhandener Rest $Q_2$ nicht unmittelbar mit Ar verbunden sein kann und daß entsprechend Formel (3b) im Falle von zwei beiderseitig an die Ar direkt gebundenen Resten $Q_2$ der Rest der Tetrazokomponente $A_2^{(+)}$ mehr als eine quartäre Gruppierung aufweisen muß.

8. Verfahren nach Anspruch 7, dadurch gekennzeichnet, daß man als basischen Farbstoff einen Disazo-Farbstoff der allgemeinen Formel (4a)

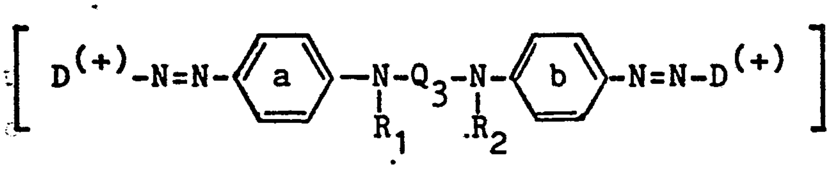 2 $X^{(-)}$ (4a)

oder der allgemeinen Formel (4b)

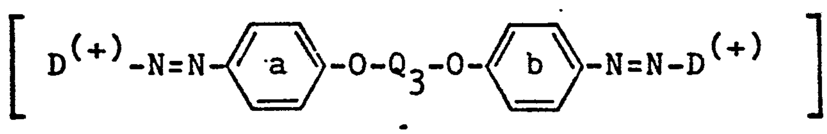 2 $X^{(-)}$ (4b)

verwendet, in welchen $D^{(+)}$ gleich oder verschieden sind und jedes $D^{(+)}$ sowie auch $X^{(-)}$ die in Anspruch 5 angege-

gebenen Bedeutungen besitzen;
$Q_3$ einen niederen Alkylenrest darstellt, der gegebenenfalls durch -O-, -NH- oder einen aromatischen carbocyclischen Rest unterbrochen ist;
$R_1$ und $R_2$ gleich oder verschieden sind und jedes ein Wasserstoffatom oder eine niedere, gegebenenfalls substituierte Alkylgruppe darstellt, oder $R_1$ und $R_2$ zusammen mit den beiden Stickstoffatomen und dem Rest $Q_3$ einen heterocyclischen Ring bilden;
und die Benzolkerne a und b durch 1 oder 2 nicht-ionogene Substituenten gleich oder verschieden substituiert sein können oder die Benzolkerne a oder b oder beide jeweils mit einem ankondensierten Benzolkern einen Naphthalinrest bilden;

9. Verfahren nach einem der Ansprüche 1 bis 3, dadurch gekennzeichnet, daß man als basischen Farbstoff einen Methin-Farbstoff der allgemeinen Formel (5)

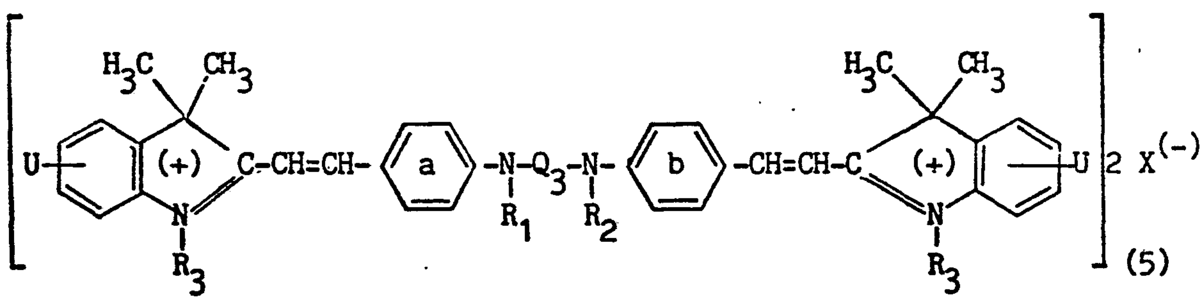

(5)

verwendet, in welcher $Q_3$, $R_1$, $R_2$, a und b und $X^{(-)}$ die in Ansprüchen 5 und 8 genannten Bedeutungen besitzen;
$R_3$ einen niederen, gegebenenfalls substituierten Alkylrest oder einen Aralkylrest bedeutet; und
U beide gleich oder verschieden sind und jedes für ein Wasserstoffatom oder einen nicht-ionogenen Substituenten steht.

10. Verfahren nach einem der Ansprüche 1 bis 3, dadurch gekennzeichnet, daß man als basischen Farbstoff einen Azamethin-Farbstoff der allgemeinen Formel (6)

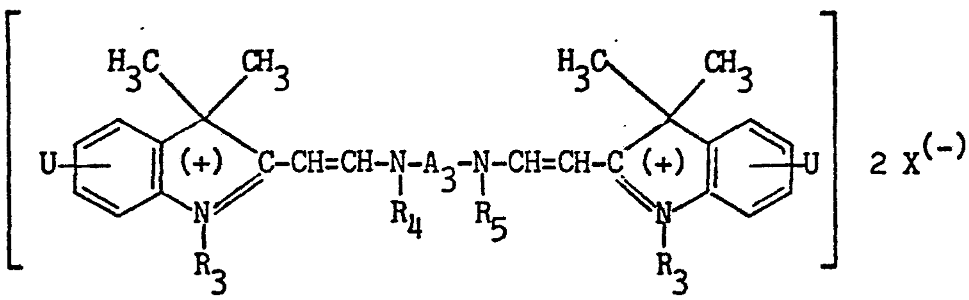

(6)

oder einen Diazamethin-Farbstoff der allgemeinen Formel (7)

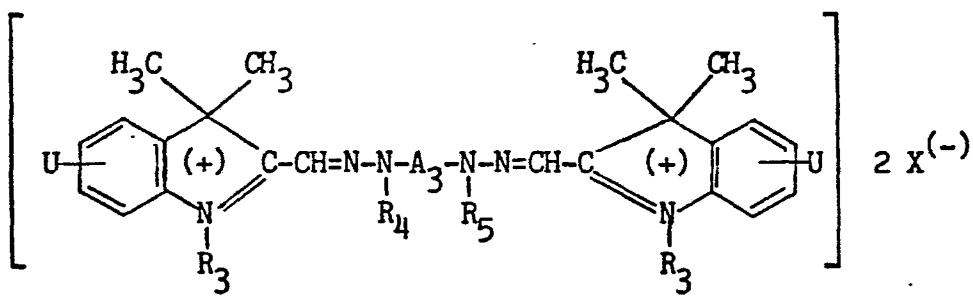

(7)

verwendet, in welchen $R_3$, U und $X^{(-)}$ die in Ansprüchen 5 und 9 genannten Bedeutungen besitzen; $A_3$ für den bivalenten Rest eines oder mehrerer aromatischer carbo- oder heterocyclischer Kerne steht, die noch durch nicht-aromatische Brückenglieder miteinander verbunden sein können; und $R_4$ und $R_5$ gleich oder verschieden sind und jedes ein Wasserstoffatom oder einen niederen, gegebenenfalls substituierten Alkylrest steht.

11. Verfahren nach einem der Ansprüche 1 bis 3, dadurch gekennzeichnet, daß man als basischen Farbstoff einen Methinfarbstoff der allgemeinen Formel (8)

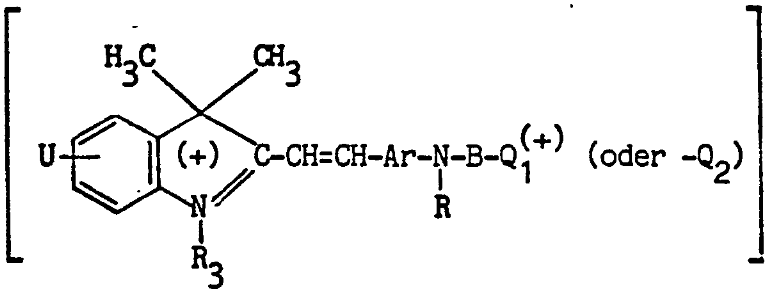

2 $X^{(-)}$ oder $X^{(-)}$ (8)

verwendet, worin Ar, B, R, $R_3$, $Q_1^{(+)}$, $Q_2$, U und $X^{(-)}$ die in den Ansprüchen 5, 6 und 9 angegebenen Bedeutungen besitzen.

12. Verfahren nach einem der Ansprüche 1 bis 3, dadurch gekennzeichnet, daß man als basischen Farbstoff einen Azamethin- oder Diazamethin-Farbstoff der allgemeinen Formel (9)

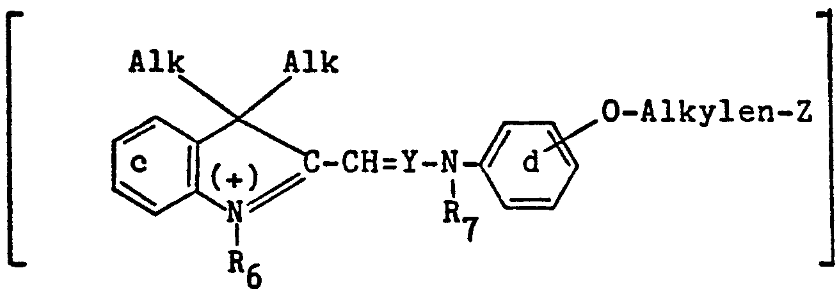

(9) n $X^{(-)}$

verwendet, in welcher $X^{(-)}$ die in Anspruch 5 angegebene Bedeutung besitzt;
$R_6$ eine Alkylgruppe von 1 bis 4 C-Atomen, die nicht-ionogen substituiert sein kann, darstellt;
Alk jeweils eine Alkylgruppe von 1 bis 4 C-Atomen bedeutet, wobei beide gleich oder verschieden voneinander sein können;
Y für den Methinrest (CH) oder ein Stickstoffatom steht;
$R_7$ ein Wasserstoffatom oder eine Alkylgruppe von 1 bis 4 C-Atomen, die nicht-ionogen substituiert sein kann, darstellt;
Alkylen für eine geradkettige oder verzweigte Alkylen-

gruppe von 2 bis 6 C-Atomen steht;
Z eine Gruppe der Formel (9a) oder (9b)

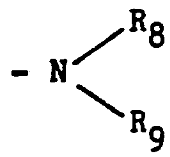 (9a) 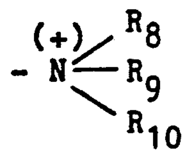 (9b)

bedeutet, in welchen
$R_8$ eine Alkylgruppe von 1 bis 4 C-Atomen ist, die nicht-ionogen substituiert sein kann,
$R_9$ eine Alkylgruppe mit 1 bis 4 C-Atomen ist, die nicht-ionogen substituiert sein kann, oder der Phenylrest ist, gegebenenfalls mit 1 oder 2 nicht-ionogenen Substituenten,
$R_{10}$ ein Wasserstoffatom oder eine Alkylgruppe von 1 bis 4 C-Atomen ist, die nicht-ionogen substituiert sein kann,
oder in welchen
$R_8$ und $R_9$ zusammen mit dem Stickstoffatom einen 5-, 6- oder 7-gliedrigen heterocyclischen Rest bilden, oder
$R_8$ und $R_9$ oder $R_8$, $R_9$ und $R_{10}$ zusammen mit dem positiv geladenen Stickstoffatom einen 5-, 6- oder 7-gliedrigen heterocyclischen Rest bilden, wobei $R_{10}$ entweder Teil des heterocyclischen Restes oder ein Wasserstoffatom oder die genannte Alkylgruppe sein kann;
die Benzolkerne c und d jeweils durch 1 oder 2 nicht-ionogene Substituenten gleich oder verschieden substituiert sein können; und
n für die Zahl 1 oder 2 steht.

13. Verfahren nach einem der Ansprüche 1 bis 3, dadurch gekennzeichnet, daß man als basischen Farbstoff einen Naphthalactam-Farbstoff der allgemeinen Formel (10) oder (11)

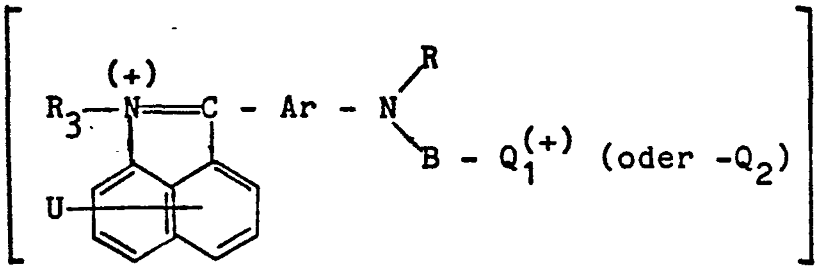

2 $X^{(-)}$ oder $X^{(-)}$ (10)

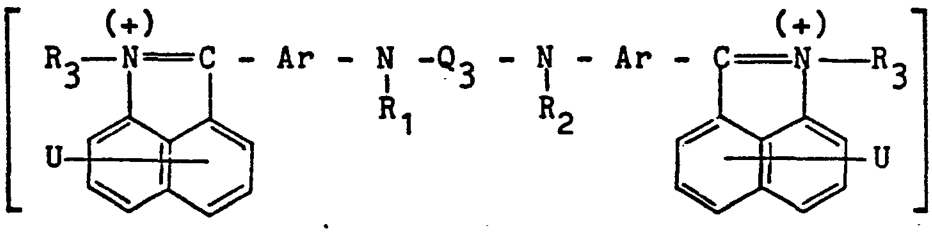

2 $X^{(-)}$ (11)

verwendet, in denen Ar, B, $Q_1^{(+)}$, $Q_2$, $Q_3$, R, $R_1$, $R_2$, $R_3$, U und $X^{(-)}$ die in den Ansprüchen 5, 6, 8 und 9 angegebenen Bedeutungen besitzen und wobei die in Formel (11) jeweils zweifach auftretenden Substituenten gleich oder verschieden voneinander sein können.

14. Verfahren nach einem der Ansprüche 1 bis 4, dadurch gekennzeichnet, daß man als basischen Farbstoff eine Verbindung der allgemeinen Formel (12) oder (13)

$$\left[(Q_2\text{- oder) } Q_1^{(+)}\text{-B-}Y_1\text{-B-}Q_1^{(+)}\text{ (oder -}Q_2)\right] m\ X^{(-)} \quad (12)$$

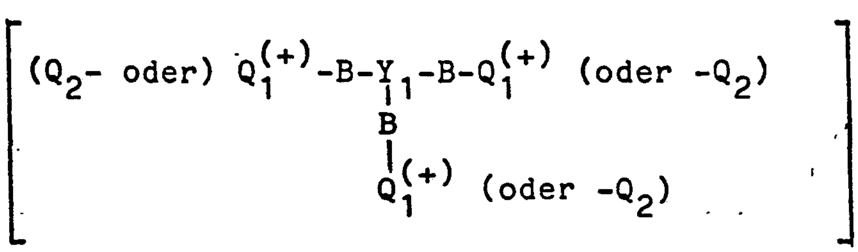

m $X^{(-)}$ (13)

verwendet, in denen B, $Q_1^{(+)}$, $Q_2$ und $X^{(-)}$ die in

den Ansprüchen 5 und 6 angegebenen Bedeutungen besitzen und wobei die in den Formeln (12) und (13) jeweils mehrfach auftretenden Substituenten gleich oder verschieden voneinander sein können;

$Y_1$ den Rest eines Farbstoffchromophors, insbesondere auf Basis einer Kupferphthalocyanin-, Anthrachinon- oder Triphenylmethan-Verbindung darstellt; und

<u>m</u> für 0, 1, 2 oder 3 steht.

15. Verfahren nach einem der Ansprüche 1 bis 14, dadurch gekennzeichnet, daß man Gemische dieser basischen Farbstoffe verwendet.

0044061

Europäisches Patentamt

# EUROPÄISCHER RECHERCHENBERICHT

Nummer der Anmeldung
EP 81 10 5430

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | GB - A - 1 568 767 (SANDOZ)<br>* Seiten 8,9; Ansprüche 1-14,20, 22-25; Seite 1, Zeile 5 - Seite 2, Zeile 8; insbesondere Seite 4, Zeilen 24-26; Beispiele 1-22; Seite 2, Zeilen 21-24 *<br>-- | 1,2,8, 15 |
| A | GB - A - 673 738 (AMERICAN CYANAMID)<br>* Insgesamt; "Das sogenannte "Neocron"-Verfahren, zitiert auf Seite 4, Zeilen 24-26 des GB - A - 1 568 767) * | 1 |
| D | & FR - A - 980 700<br>-- | |
| X | DE - A - 2 241 259 (BAYER)<br>* Ansprüche 1-3,7,9; Seite 15, letzte Zeile - Seite 16, Zeile 3; Beispiel 12; Seite 28, Tabelle, erster Formel *<br>-- | 1,2 |
| A | DE - B - 1 269 092 (KONRAD PETER)<br>* Anspruch; Spalte 1, Zeilen 1-45; Beispiele 2-4 *<br>-- | 1 |
| A | DE - A - 2 141 987 (BAYER)<br>* Insgesamt, insbesondere Seite 28, Absatz 3 *<br>-- | 1 |
| A | DE - A - 2 459 564 (HOECHST)<br>* Insgesamt, insbesondere Seite 6, Absatz 2 *<br>-- ./. | 1,4,15 |

KLASSIFIKATION DER ANMELDUNG (Int. Cl.³)

D 06 P 3/70, 1/41, 1/90
D 01 F 1/06, 6/18//
C 09 B 44/00, 69/00, 23/16, 26/04, 57/06

RECHERCHIERTE SACHGEBIETE (Int. Cl.³)

D 06 P 3/70, 1/41, 1/42, 1/08, 1/90, 7/00
D 01 F 1/06, 6/18, 6/38, 6/40
C 09 B 69/00, 67/00

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 19-10-1981 | DEKEIREL |

EPA form 1503.1 06.78

Europäisches Patentamt

# EUROPÄISCHER RECHERCHENBERICHT

Nummer der Anmeldung

EP 81 10 5430



| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| A | DE - A - 2 822 912 (HOECHST)<br>* Insgesamt *<br>-- | 5-8,14 | |
| A | DE - A - 2 823 169 (HOECHST)<br>* Insgesamt *<br>-- | 5-8,14 | |
| DA | DE - A - 2 043 090 (VEB)<br>* Insgesamt *<br>-- | 1 | RECHERCHIERTE SACHGEBIETE (Int. Cl. 3) |
| A | GB - A - 2 017 156 (YORKSHIRE CHEMICALS)<br>* Insgesamt *<br>-- | 1 | |
| A | GB - A - 1 257 652 (YORKSHIRE CHEMICALS)<br>* Insgesamt *<br>-- | 12 | |
| P | GB - A - 2 048 963 (I.C.I.)<br>* Insgesamt *<br>-- | 1,2,14 | |
| P | EP - A - 0 029 136 (HOECHST)<br>* Insgesamt, insbesondere Seite 18, Absatz 3 *<br>-- | 1,2,12 | |
| P | EP - A - 0 015 232 (CIBA-GEIGY)<br>* Insgesamt, insbesondere Seite 16, Absatz 3 *<br>-- ./. | 1,2 | |

0044061
Nummer der Anmeldung
EP 81 10 5430


Europäisches Patentamt

# EUROPÄISCHER RECHERCHENBERICHT

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| P | EP - A - 0 014 678 (CIBA-GEIGY)<br>* Insgesamt, insbesondere Seite 15, Absatz 3 *<br>-- | 1,2 | |
| P | EP - A - 0 015 872 (CIBA-GEIGY)<br>* Insgesamt, insbesondere Seite 24, Beispiel 139 *<br>---- | 1 | |
| | | | RECHERCHIERTE SACHGEBIETE (Int. Cl. 3) |